(19) **Europäisches Patentamt / European Patent Office / Office européen des brevets**

(11) **EP 1 486 377 B1**

(12) **EUROPEAN PATENT SPECIFICATION**

(45) Date of publication and mention of the grant of the patent:
**20.08.2008 Bulletin 2008/34**

(51) Int Cl.:
***B60Q 1/48*** *(2006.01)*     ***B60R 16/02*** *(2006.01)*

(21) Application number: **04012263.2**

(22) Date of filing: **24.05.2004**

(54) **Movable body surrounding monitoring apparatus**

Umgebungserfassungsvorrichtung für einen beweglichen Körper

Dispositif pour détecter l'environnement d'un corps mobile

(84) Designated Contracting States:
**DE FR GB**

(30) Priority: **28.05.2003 JP 2003150804**

(43) Date of publication of application:
**15.12.2004 Bulletin 2004/51**

(73) Proprietor: **AISIN SEIKI KABUSHIKI KAISHA**
**Kariya-shi, Aichi-ken 448-8650 (JP)**

(72) Inventor: **Kakinami, Toshiaki**
**Kariya-shi**
**Aichi-ken 448-8650 (JP)**

(74) Representative: **TBK-Patent**
**Bavariaring 4-6**
**80336 München (DE)**

(56) References cited:
**EP-A- 1 005 234**     **EP-A- 1 403 138**
**EP-A- 1 403 139**

**Description**

FIELD OF THE INVENTION

The present invention generally relates to a movable body surrounding monitoring apparatus for monitoring circumstance of a movable body. More particularly, the present invention pertains to a movable body surrounding monitoring apparatus for monitoring a environment around the movable body and displaying an image of a view from the movable body positioned at an intended position.

For instance, the present invention pertains to a movable body surrounding monitoring apparatus being preferable for monitoring an environment around a vehicle and for displaying an object which can be an obstacle upon vehicle parking.

BACKGROUND OF THE INVENTION

In order to minimize a blind area behind a vehicle, various types of apparatus for monitoring an environment behind the vehicle have been disclosed and further commercially offered in the markets. Such apparatus includes, for example, a camera at a vehicle rear side, which monitors the environment behind the vehicle, and a monitor being installed near a driver's seat, which displays an image of the environment behind the vehicle shot by the camera.

An apparatus according to the preamble of claim 1 is known from EP 1 005 234 A2.

A garaging assist system for automobile, for example, is disclosed in a Japanese Patent Laid-open published as No. 1987-278477. The garaging assist system for automobile includes a computer for calculating an automobile driving track based upon signals outputted from a distance sensor and a steering wheel angle sensor. When the computer judges that a distance between the automobile on an expected driving track and an obstacle around the automobile is less than a predetermined distance, a user (mainly the driver) can be auditorily alerted by an alarm.

As another example, disclosed is a rear sight display unit for a vehicle in a Japanese Patent Laid-open published as No. 1989-141137. The rear sight display unit for the vehicle includes obstacle detecting sensors set at front left and front right portions of the vehicle for detecting the vehicle front sides approaching to obstacles. The detected information is displayed with the rear sight in a monitor window at the same time. Therefore, the vehicle backward operation by the driver can be performed without causing the vehicle front left and front right portions to become in contact with the obstacles even if the driver's visual line is not shifted from the monitor display plane to the vehicle forward.

As a further example, disclosed is a parking support system in a Japanese Patent Laid-open published as No. 2001-187553. The parking support system includes a single camera for image capturing surroundings of a moving vehicle at first and second points, an imaging unit for converting the surroundings of the moving vehicle into first and second images which are produced in time series, a stereoscopic object-specifying unit for detecting and specifying a stereoscopic object in each image, a vehicle position calculating unit for calculating a vehicle moving data from the first point to the second positions, and a stereoscopic object distance calculating unit for calculating a distance between the vehicle and the stereoscopic object based upon the positions of the stereoscopic object in the first and second images and the vehicle moving data. The parking support system including the above structure generates a third image for instructing the driver based upon the images by the imaging unit and the distance between the vehicle and the stereoscopic object calculated by the stereoscopic object distance calculating unit. Therefore, an accurate distance between the vehicle and the stereoscopic object can be calculated in accordance with principles of triangulation modes with the stereoscopic object in the first and second images.

As a still further example, disclosed is a relative position detection device and a parking auxiliary apparatus furnished with the relative position detection device in a Japanese Patent Laid-open published as No. 2002-052999. According to the disclosure, an own vehicle stop position marker and a lateral direction measuring marker are superposed and displayed in a monitor window. Therefore, a position of the own vehicle relative to a reference object can be detected by use of the camera image and a general steering wheel angle sensor without using a gauge sensor. In this publication, the own vehicle stop position marker is defined as a marker for stopping the own vehicle in a positional relation that the own vehicle and the reference object are positioned possessing a predetermined orientation. The lateral direction measuring marker is defined as a marker for measuring a lateral distance between the own vehicle and the reference object in response to a vehicle moving amount in the monitor window.

In the meantime, a conventional technique has been widely known in an image processing technical field, which reconstructs a three-dimensional (3D) shape by use of two cameras. For example, a thesis "2. Solve a Stereophonic mechanism" by Koichiro Deguchi of a publication entitled "Information Processing" (date of publication of vol. 37 No. 7: July, 1996) describes gauging a stereoscopic object by a stereo. According to the disclosure in the thesis, a position of each corresponding point in the space can be determined based upon features of the respective images shot by the two cameras (e.g. focal lengths of the two camera lenses, image centers thereof, pixel size thereof, and so on), positions and postures of the two cameras, and a corresponding of the two images.

Likewise, according to a column "Three-dimensional shape reconstruction by a stereo vision" at pages 161 and 162 of a publication entitled "Mathematics of Spatial data" (date of publication of the first edition: March 10, 1995, publishing office: Asakura, Inc., author: KANATANI, Kenichi), a stereo vision is defined as a method of calculating a three-dimensional shape of a substance in accordance with principles of triangulation modes based upon a corresponding relation between the images shot by two cameras. The stereo vision is further defined as one of the most fundamental methods of extracting a three-dimensional information from images so as to be used for a robot control.

Further, according to another thesis "3. Manipulation of Image Sequence" by Kohichirou Deguchi in the publication entitled "Information Processing" (date of publication of vol. 37 No. 8:August, 1996), a three-dimensional shape of an object in a image sequence can be reconstructed in accordance with the same principles of the aforementioned stereo. Especially, when the image sequence is given, the motion of the object can be tracked. Therefore, the image sequence is considered to be more preferable than only two images in this regard for extracting corresponding points.

According to the above-described four patent documents, the view at a rear side of the vehicle can be shot by the camera and be displayed in the monitor. Therefore, the vehicle can be moved rearward or parked observing the obstacle behind the vehicle displayed in the monitor. However, the environment around the vehicle comer is out of the view shot by the camera, so that the environment cannot be displayed in the monitor. In this case, when the vehicle is moved rearward while turning for example, the driver cannot recognize whether or not there is a sufficient distance between a turning inside of the own vehicle comer and an obstacle such as the other vehicle.

In order to overcome the above drawback, a camera possessing an appropriate camera angle can be projected from the vehicle so as to encompass the corner portion of the own vehicle in the camera shot view. However, this type of arrangement of the camera on the vehicle may spoil a vehicle design, thereby not being appropriate for all types of vehicles. As the other method to overcome the above drawback, the camera can be mounted near the vehicle comer. However, it is considered to be difficult because a lighting unit is usually disposed around the vehicle comer. For example, when the camera is assembled in the lighting unit, the camera is required to be sufficiently heat-resistant or a surface cover of the lighting unit is required to be made of optical materials for the camera such that image quality is not spoiled. In this case, technical and cost problems still remain. Even if the camera can be assembled in the lighting unit, the road immediately below a vehicle bumper may not be able to be shot by the camera due to a projected portion of the vehicle bumper.

In light of foregoing, recent demands have lead to an apparatus capable of displaying an image of a vehicle comer or around, which does not appear in the view shot by the camera, without spoiling the vehicle design. However, it seems to be difficult to overcome the above-described drawback only from an aspect of the camera arrangement.

In the meantime, according to the image processing method disclosed in the above nonpatent documents, a three-dimensional shape of an obstacle can be restored by use of a single camera. Therefore, if this type of image processing method can be appropriately applied to an apparatus for monitoring an environment around a movable body such as a vehicle, it is considered to be a help to overcome the above-described drawback. None of the above documents disclose such a technology for applying the image processing method to the apparatus for monitoring the environment around the movable body. Further, the movable body surrounding monitoring apparatus can be applied not only to a vehicle but also throughout movable bodies such as a mobile robot. Generally, various requirements remain for the movable body surrounding monitoring apparatus, such as requirement of a method of detecting information on an environment such as a size and posture of a substance around the movable body. However, none of the documents disclose the description or suggestion.

According to the above-described Patent document 3, an image A shot while the vehicle 1 is at a position a is converted to an image as if it were shot while the vehicle 1 was at a position b, wherein an image C can be calculated. A distance between the vehicle and a stereoscopic object can be geometrically calculated based upon a deviation between the two images and the vehicle moving data. However, the Patent document 3 does not make a contribution to the above-described drawback.

Furthermore, any of abovementioned apparatuses is not functioned preferably when the moving obstacle exists in an image shot by the camera. For instance, when such apparatus creates a virtual image, the moving obstacle is considered as still being in the virtual image even though the moving obstacle has been already out of the view shot by the camera, and not existed in the shot image at that time. Thus, to overcome such contradiction, the moving obstacle in the image shot by the camera should be detected, furthermore, the detected moving obstacle should be controlled, for example, not to display the virtual image and the like.

A need thus exists for providing an improved movable body surrounding monitoring apparatus capable of assuring a view from a movable body at a desired position and appropriately displaying an image of the view, regardless of arrangement and quantity of a detecting method of detecting information of the environment such as size and position of a substance around the movable body, at the same time, detecting the moving obstacle and controlling displaying the image when the moving obstacle is detected.

SUMMARY OF THE INVENTION

In light of foregoing, a movable body surrounding monitoring apparatus according to the present invention characterized in that the apparatus includes an environment information detecting means (SR) for detecting and storing information about an environment around a movable body, a movable body information detecting means (MB) for detecting and storing position and posture of the movable body, an information combining means (CB) for combining the information detected by the movable body information detecting means (MB) and the information detected by the environment information detecting means (SR), correcting a relative relationship of position and posture between the movable body and the environment around the movable body, and outputting information of such relative relationship, a specific view creating means (SV) for creating a specific view of the movable body with reference to information of the environment around the movable body at a specific position based on the information outputted from the information combining means (CB), a displaying means (VD) for displaying the specific view created by the specific view creating means (SV) as an image, a moving obstacle detecting means (MO) for detecting an obstacle movable around the movable body based on the information detected by the environment information detecting means (SR) and a display controlling means (VC) for controlling displaying the specific view at the displaying means (VD) based on the detected result by the moving obstacle detecting means (MO).

BRIEF DESCRIPTION OF THE DRAWING FIGURES

The foregoing and additional features and characteristics of the present invention will become more apparent from the following detailed description considered with reference to the accompanying drawing figures in which like reference numerals designate like elements and wherein:

FIG. 1 is a block diagram illustrating a structure of a movable body surrounding monitoring apparatus according to a first embodiment of the present invention;

FIG. 2 is a block diagram illustrating a structure of a movable body surrounding monitoring apparatus according to a second embodiment of the present invention;

FIG. 3 is a block diagram illustrating a structure of a movable body surrounding monitoring apparatus according to a third embodiment of the present invention;

FIG. 4 is a perspective view illustrating a vehicle mounting the movable body surrounding monitoring apparatus as a parking asist system according to the embodiments of the present invention;

FIG. 5 is a block diagram illustrating a structure of the parking asist system according to the embodiments of the present invention;

FIG. 6 is an explanatory view for explaining a geometric relationship for corresponding a feature point of a substance in the space by two cameras so as to reconstruct the three-dimensional shape according to the embodiments of the present invention;

FIG. 7 is an explanatory view for exemplifying a feature point tracking so as to reconstruct the three-dimensional shape according to the embodiments of the present invention;

FIG. 8 is an explanatory view for exemplifying a tracking so as to reconstruct the three-dimensional shape according to the embodiments of the present invention;

FIG. 9 is an explanatory view for explaining an example of detecting condition of the moving obstacle in the image shot when the moving obstacle is in static state;

FIG. 10 is an explanatory view for explaining an example of detecting condition of the moving obstacle in the image shot when the moving obstacle is moving;

FIG. 11 is a plain view illustrating a vehicle model according to the embodiments of the present invention;

FIG. 12 is a plain view illustrating an example of a method of detecting and tracking a positional coordinate of the movable body and a direction thereof after moving with reference to a positional coordinate of the vehicle and the direction thereof at a movement starting position in a predetermined three-dimensional coordinate according to the embodiments of the present invention;

FIG. 13 is a plain view illustrating an example of a condition specifying positional coordinate and posture of the vehicle in a third-dimensional map according to the embodiments of the present invention;

FIG. 14 is a plain view illustrating a displayed view shot by a virtual camera arranged at a rear portion of the vehicle according to the embodiments of the present invention;

FIG. 15 is a plain view illustrating a displayed view shot by virtual cameras respectively arranged at a front left comer of the vehicle and at a rear left comer thereof according to the embodiments of the present invention;

FIG. 16 is a plain view illustrating a displayed view shot by a virtual camera arranged at a side portion of the vehicle according to the embodiments of the present invention:

FIG. 17 is a plain view illustrating a displayed view at 180 degrees shot by a virtual camera arranged at an upper rear portion of the vehicle according to the embodiments of the present invention:

FIG. 18 is a plain view illustrating a displayed view at 360 degrees shot by a virtual camera arranged above the vehicle according to the embodiments of the present invention;

FIG. 19 is a plain view exemplifying how the displayed view varies in response to rearward movement of the vehicle according to the embodiments of the present invention;

FIG. 20 is a plain view exemplifying an image showing a rear portion of the vehicle at a position denoted with double dashed lines in FIG. 19 and an obstacle around the vehicle;

FIG. 21 is a plain view exemplifying an image showing a rear portion of the vehicle at a position denoted with a solid line in FIG. 19 and the obstacle around the vehicle;

FIGS. 22 (A) and (B) are plain views exemplifying a monitor showing a touch panel switch, wherein a screen displayed in the monitor is shifted from a normal displayed screen (A) to a screen (B) which displays a zoomed image;

FIG. 23 is a plain view exemplifying a movement of the vehicle which is parallel parked at a left-hand side along a vehicle forward moving direction;

FIG. 24 is a plain view exemplifying a virtual image of a front left corner portion of the vehicle displayed in a monitor when the vehicle is turned in an arrow direction after rearward moving in FIG. 23;

FIG. 25 a plain view exemplifying a virtual image from a cross-upper viewpoint of the vehicle so as to illustrate a condition for parallel parking the vehicle at the right-hand side along the vehicle forward moving direction according to the embodiments of the present invention;

FIG. 26 is a plain view exemplifying a virtual image from an above viewpoint of the vehicle so as to illustrate a condition the condition for parallel parking the vehicle at the right-hand side along the vehicle forward moving direction according to the embodiments of the present invention, and

FIG. 27 is a plain view exemplifying a virtual image from a viewpoint of the vehicle upper front portion to a vehicle rear side so as to illustrate a condition for parallel parking the vehicle at the right-hand side along the vehicle forward moving direction according to the embodiments of the present invention.

## DETAILED DESCRIPTION OF THE INVENTION

Preferred embodiments of the present invention will be described hereinbelow in detail with reference to the accompanying drawings.

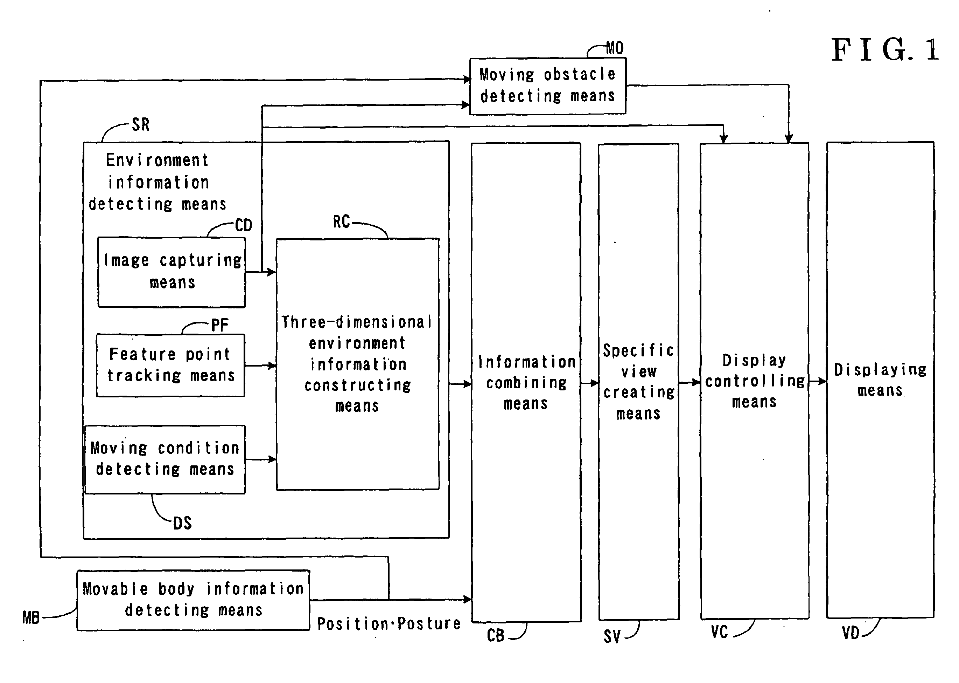

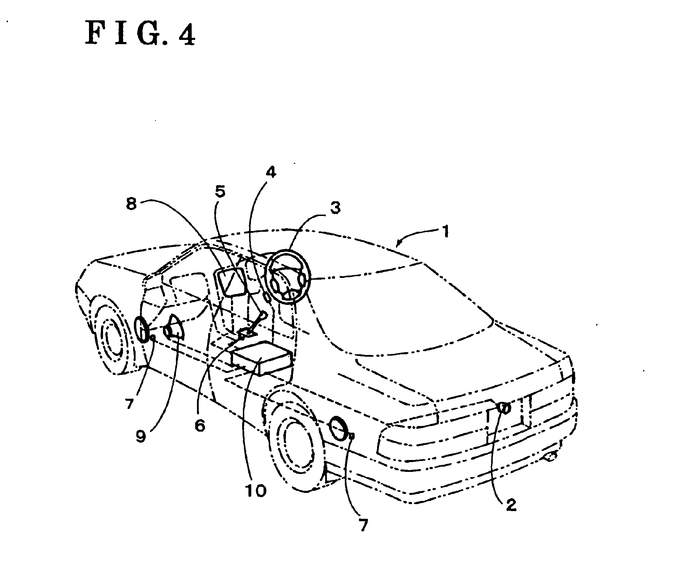

For example, a movable body surrounding monitoring apparatus according to a first embodiment of the present invention is mounted on a vehicle illustrated in FIG. 4 and is applied to a parking assist system. As illustrated in FIG. 1, the movable body surrounding monitoring apparatus is provided with a environment information detecting means SR

for detecting and storing information of environment surrounding the movable body, such as size and position of an object around the movable body, and a movable body information detecting means MB for consecutively detecting and storing position and posture of the movable body. When the movable body is applied to a vehicle, the movable body information detecting means MB can be configured with a sensor for detecting vehicle dynamic condition such as a vehicle driving speed, a vehicle steering condition, and a vehicle turning condition. According to the present invention, a coordinate depicting a vehicle position and an angle depicting a vehicle posture can be detected based upon at least a signal outputted from a sensor, which will be described later.

As shown in FIG.1, the environment information detecting means SR includes an image capturing means CD mounted on the movable body for obtaining an image of the environment abound the movable body and for outputting the image information, a feature point tracking means PF for detecting a coordinate of a feature point in a first image at a first state of the movable body and a coordinate in a second image at a second state of the movable body, which corresponding to the feature point in the first image, based on at least two images which are the first image at the first state of the movable body and the second image at the second state thereof when the movable body moves from the first state to the second state, a moving condition detecting means DS for detecting the position and posture of the movable body at least at the first and the second states, and a three-dimensional environment information constructing means RC for constructing environment information by estimating a three dimensional coordinate of the feature point based upon the position and posture of the movable body at the first and second states detected by the moving condition detecting means DS, the coordinate of the feature point in the first image shot at the first state of the movable body, and a coordinate in the second image at the second state, which corresponds to the feature point in the first image. If the moving condition detecting means DS detects a running condition of the vehicle as a movable body, the moving condition detecting means DS may be various types of sensors for detecting, such as a vehicle speed, steering angle and rotating condition. Furthermore, the moving condition detecting means DS may use information of the movable body detected at the movable body information detecting means MB. The image capturing means CD may be use a CCD camera.

Further, the movable body surrounding monitoring apparatus is further provided with an information combining means CB, a specific view creating means SV, and a displaying means VD. The information combining means CB combines the movable body information detected by the movable body information detecting means MB and the information of the environment surrounding the movable body detected by the environment information detecting means SR, and corrects a relation of the position and posture of the movable body relative to the environment surrounding the movable body. The specific view creating means SV creates a specific view of the movable body with reference to the information of the environment surrounding the movable body located at a specific position based upon the positional and postural relation of the movable body relative to the surrounding environment outputted from the information combining means CB. The displaying means VD displays a image of the specific view created by the specific view creating means SV. For example, the displaying means VD can be represented such as a display monitor (not shown) installed in a movable body.

On the other hand, the movable body surrounding monitoring apparatus is further includes a moving obstacle detecting means MO for detecting a obstacle moving around the movable body based on the detected information at the environment information detecting means SR and a display controlling means VC for controlling an image displaying of a specific view on the displaying means VD based on the obstacle detected by the moving obstacle detecting means MO. The moving obstacle detecting means MO is configured for detecting the moving obstacle from the image shot by the image capturing means CD, and the display controlling means VC is configured for controlling (even prohibiting) displaying the image of the specific view by the displaying means VD if a predetermined condition is fulfilled after the moving obstacle is detected by the moving obstacle detecting means MO.

The aforementioned predetermined condition may be at least one of following three conditions; (1) a time equal to or more than a predetermined time pasts after the moving obstacle disappears from the image shot by the image capturing means CD, (2) the movable body is moved equal to or more than a predetermined distance, or (3) the moving obstacle rotates equal to or more than a predetermined angle.

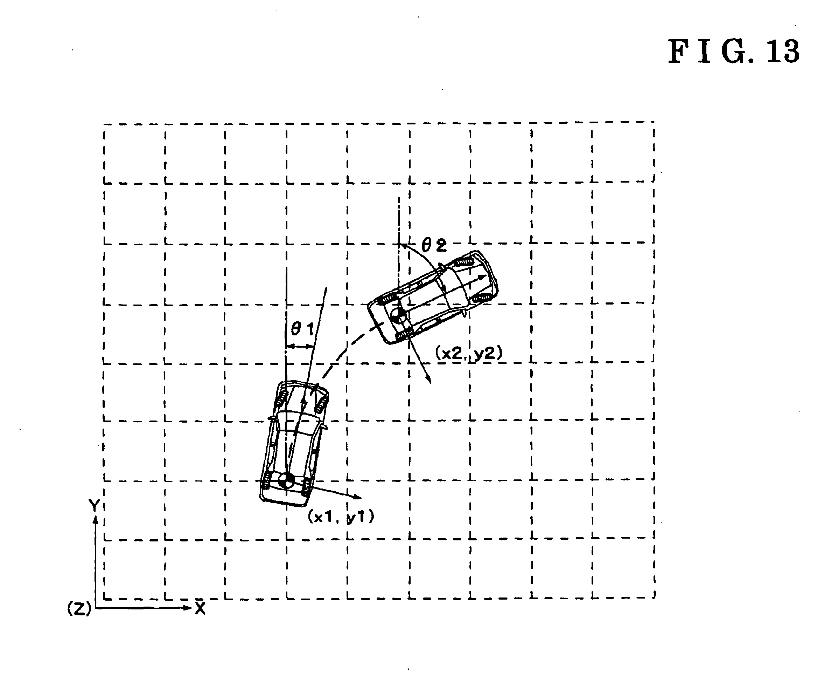

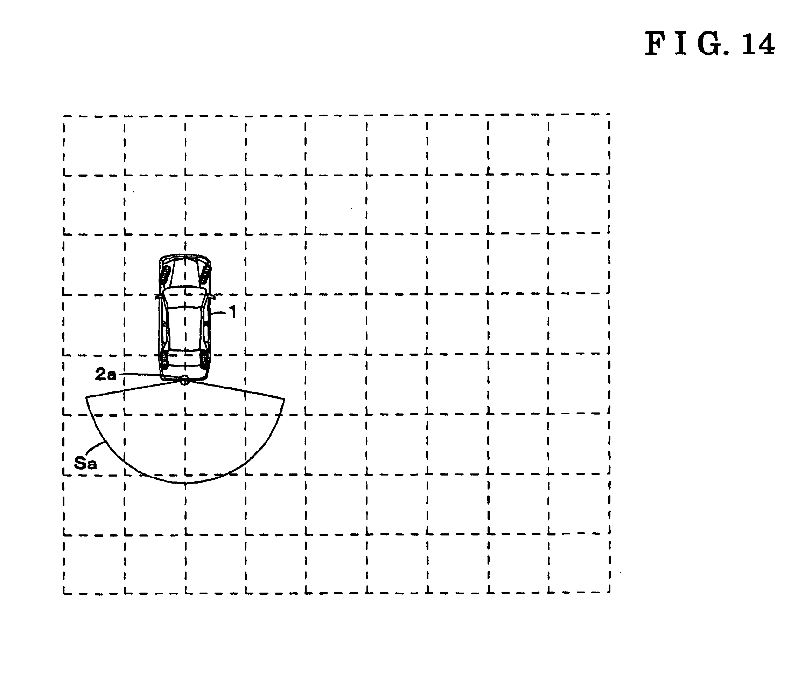

When the movable body is in static state, based on two images shot by the image capturing means CD, the moving obstacle detecting means MO detects the moving obstacle by detecting a differential between the first image at the first state and the second image at the second state shot by the image capturing means CD using at least one of arithmetical operation or logical operation. On the other hand, when the movable body is in moving state, based on two images shot by the image capturing means CD, the moving obstacle detecting means MO detects the moving obstacle by detecting a differential between an estimated second image at the second state based on the first image at the first state and the detected information at the movable body information detecting means MB, and the second image at the second state using at least one of arithmetical operation or logical operation. The configuration of the moving obstacle detecting means MO will be described later in detail in reference to FIG13 and FIG.14.

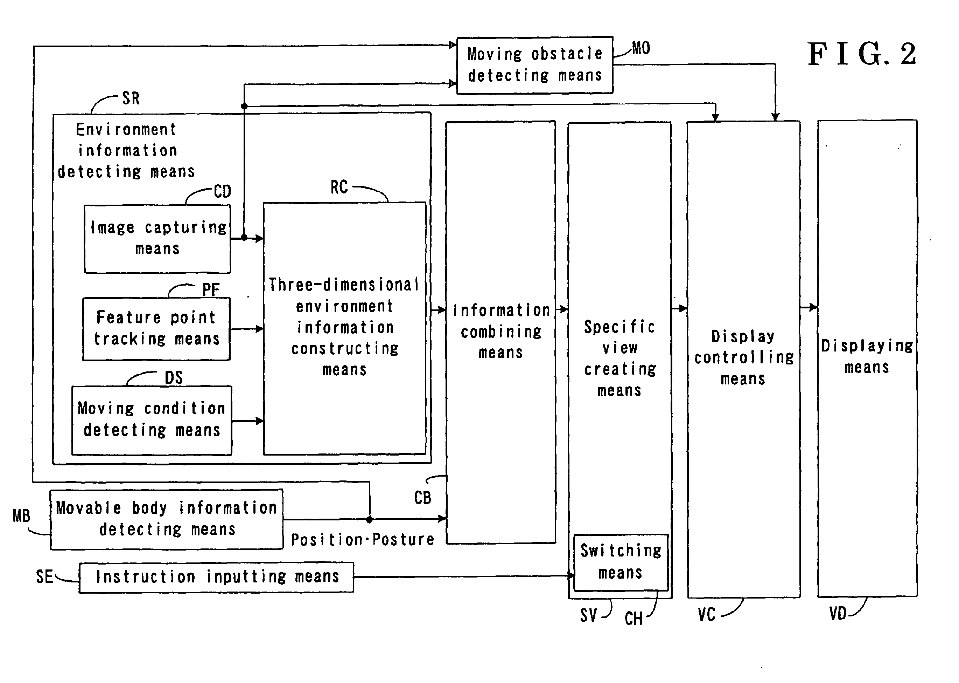

A movable body surrounding monitoring apparatus according to a second embodiment of the present invention is mounted, for example on the vehicle 1 illustrated in FIG. 4 and is applied to the parking asist system. As illustrated in FIG. 2, the movable body surrounding monitoring apparatus is provided with an instruction inputting means SE in addition to the structure illustrated in FIG. 1. A switching means CH is included in the specific view creating means SV. Operation of the switching mans CH switches the specific view created by the specific view creating means SV to a view selected based upon the driver's instruction inputted by the instruction inputting means SE. In the second embodiment of the present invention, the display controlling means VC controls so as to restrict (e.g. prohibit) the image displaying of the specific view on the displaying means VD when the predetermined condition is fulfilled after the moving obstacle is detected by the moving obstacle detecting means MO. The instruction inputting means SE inputs an instruction reflecting a vehicle driver's intention regarding a specific view. A mechanical switch (not shown) may be used as the instruction inputting means SE. Further, when the display monitor (not shown) is used as the displaying means VD, a touch panel on a display screen of the monitor may be used as the instruction inputting means SE.

Still further, a voice recognition equipment may be applied as the instruction inputting means SE. The image displayed by the displaying means VD based on the output from the specific view creating means SV can be constructed with a predetermined image and other images which may have been enlarged, diminished, rotated, shot from a different viewpoint, or the like.

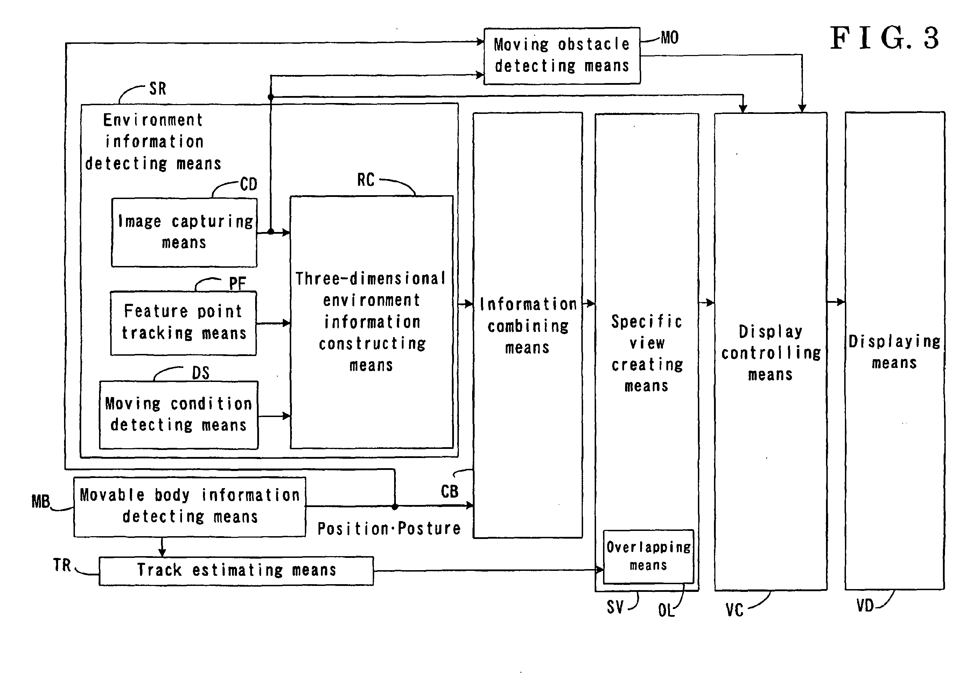

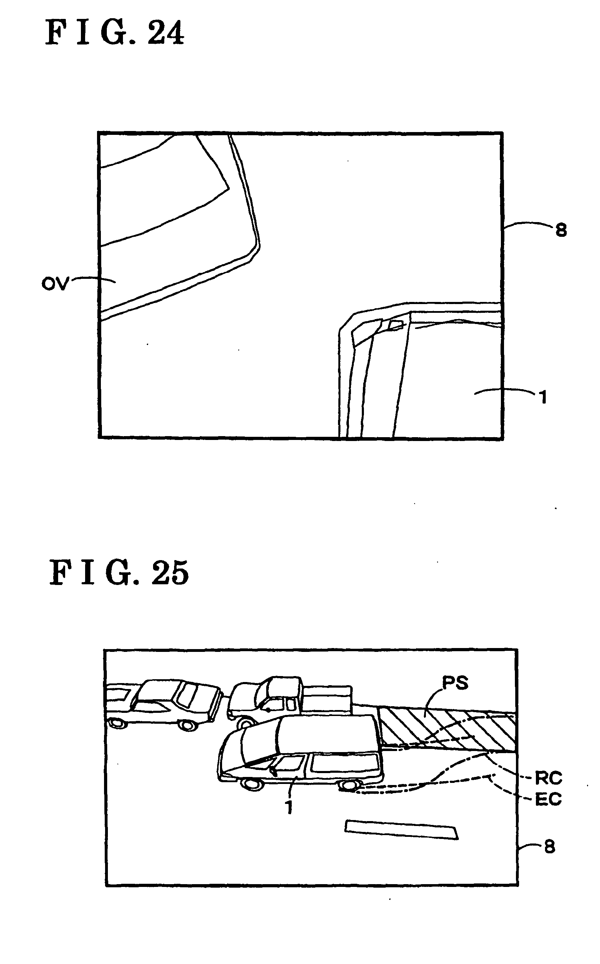

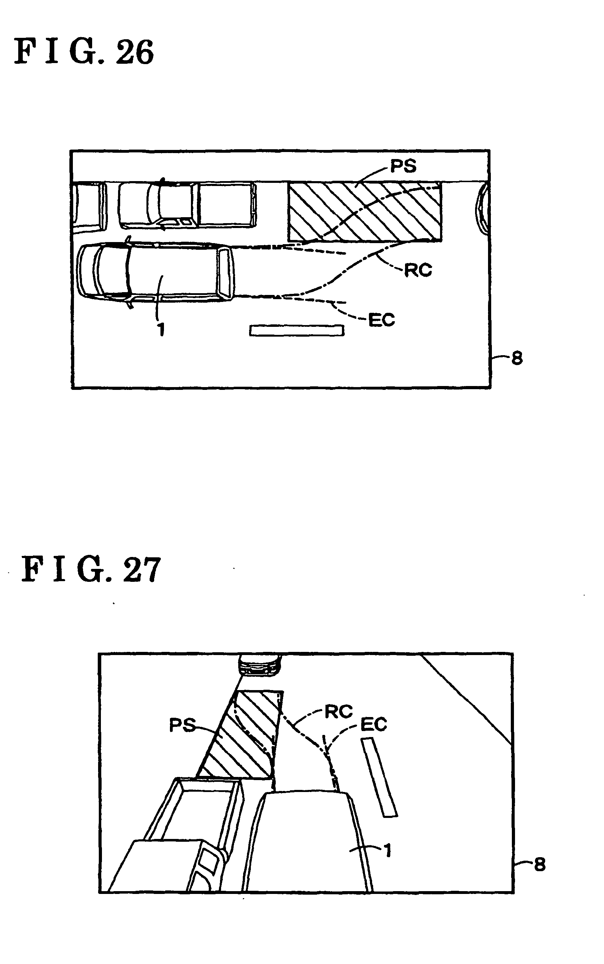

A movable body surrounding monitoring apparatus according to a third embodiment of the present invention is mounted, for example on the vehicle 1 illustrated in FIG. 4 and is applied as the parking asist system. As illustrated in FIG. 3, the movable body surrounding monitoring apparatus is provided with a track estimating means TR in addition to a structure illustrated in FIG. 1. The track estimating means TR estimates a moving track of the movable body based upon the information detected by the movable body information detecting means MB. The specific view creating means SV includes an overlapping means OL for overlapping an expected moving track of the movable body estimated by the track estimating means TR on the specific view. The displaying means VD displays an image in which the estimated moving track has been overlapped on the specific view. In this embodiment, when a predetermined condition is fulfilled after the moving obstacle is detected in the image shot by the image capturing means CD, the display controlling means VC controls image displaying of a specific view by the displaying means VD. An estimated vehicle driving track can be applied, for example, as the estimated moving track by the track estimating means TR, which will be described later with reference to FIGS. 25 through 27.

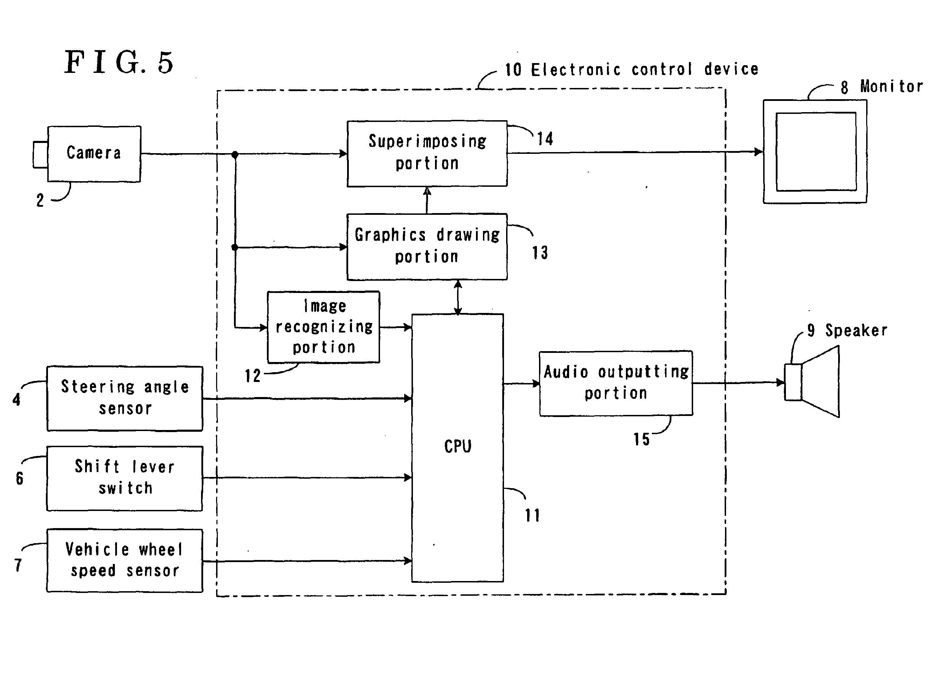

When the above-described movable body is represented as a vehicle, the movable body surrounding monitoring apparatus is applied to a parking asist system illustrated in FIGS. 4 and 5. As illustrated in FIG. 4, a camera 2 (e.g. a CCD camera) corresponding to the image capturing means CD is mounted at a rear portion of the vehicle 1 so as to obtain an image of the environment around there. The image information obtained by the camera 2 is provided to an electronic control unit 10. The electronic control unit 10 is housed in a container mounted on the vehicle 1 and acts as the moving condition detecting means DS, the movable body information detecting means MB, the three-dimensional environment information constructing means RC, the information combining means CB, the specific view creating means SV, the moving obstacle detecting means MO, the display controlling means VC, the switching means CH, the overlapping means OL and the track estimating means TR. A steering angle sensor 4 is disposed in the vehicle 1 so as to detect a steering angle of a steering wheel 3. A shift lever switch 6 is disposed in the vehicle 1, which is turned on when a shift lever 5 is shifted to a reverse stage. The detected steering angle and the on signal are then provided to the electronic control unit 10, respectively.

Further, according to the embodiments of the present invention, vehicle wheel speed sensors 7 are mounted on respective vehicle wheels so as to detect rotational speed of the respective corresponding vehicle wheels. The detected vehicle wheel speed is supplied to the electronic control unit 10. Accordingly, a moving distance of the movable body at least between a first position and a second position can be gauged based upon the detection result of the vehicle wheel speed sensors 7. A monitor 8 is arranged at a predetermined position in the vehicle 1 and should be easily visible by the driver. The monitor 8 displays visual information for parking guiding in response to output signals from the electronic control unit 10. That is, according to the embodiments of the present invention, the monitor 8 acts as the displaying means VD explained in FIGs. 1 through 3. Further, a speaker 9 is disposed at a predetermined position in the vehicle 1, thereby enabling to output audio information for parking guiding in response to an output signal from the electronic control unit 10.

With reference to FIG. 5, the steering angle sensor 4, the shift lever switch 6, and the vehicle wheel speed sensors 7 are connected to a CPU 11 in the electronic control unit 10 via an input interface (not shown). The monitor 8 is connected to a superimposing portion 14 in the electronic control unit 10 via an output interface (not shown). The speaker 9 is connected to the CPU 11 via an audio outputting portion 15. The camera 2 is connected to an image recognizing portion 12, a graphics drawing portion 13, and the superimposing portion 14 via the input interface. The CPU 11, the image recognizing portion 12, the graphics drawing portion 13, a superimposing portion 14, and an audio outputting portion 15 are connected by bus bars, respectively. Information in each module is stored for a predetermined period of time and can be read out when needed.

The information of the image of the environment surrounding the vehicle 1 shot by the camera 2 is supplied to the CPU 11 for calculation via the image recognizing portion 12. The signal outputted from the vehicle wheel speed sensors 7 and so on are also supplied to the CPU 11 for the calculation. The graphics drawing portion 13 draws a three-dimensional graphics in response to a synchronization signal extracted from the image shot by the camera 2 based upon the calculated result. In the meantime, calculation is performed by the CPU 11 for the purpose of the parking assistance. A graphics based upon the calculation result is drawn by the graphics drawing portion 13. The graphics drawn by the graphics drawing portion 13 and the image shot by the camera 2 are superposed by the super imposing portion 14 when needed and are displayed in the window screen of the monitor 8. In this case, it is possible to display an image containing only the graphics in the window screen of the monitor 8. As described above, the three-dimensional environment information constructing means RC, the information combining means CB, the specific view creating means SV, and the display controlling means VC are configured with the CPU 11, the image recognizing portion 12, and the graphics drawing portion 13.

In this way, when the vehicle 1 is moved from the first state to the second state, the feature point tracking means PF detects the coordinate of the feature point in the image shot at the first state by the camera 2 and also detects the coordinate, which corresponds to the feature point, in the image shot at the second state by the camera 2. The moving condition detecting means DS detects the positions and postures of the movable body at least at the first and second states, respectively. In the foregoing manner, the three-dimensional environment information constructing means RC reconstructs a three-dimensional shape based upon the positions and postures of the movable body at the first and second states, the coordinate of the feature point in the image shot at the first state by the camera 2, and the coordinate, which corresponds to the feature point, in the image shot at the second state by the camera 2, wherein a three-dimensional coordinate of the feature point can be obtained.

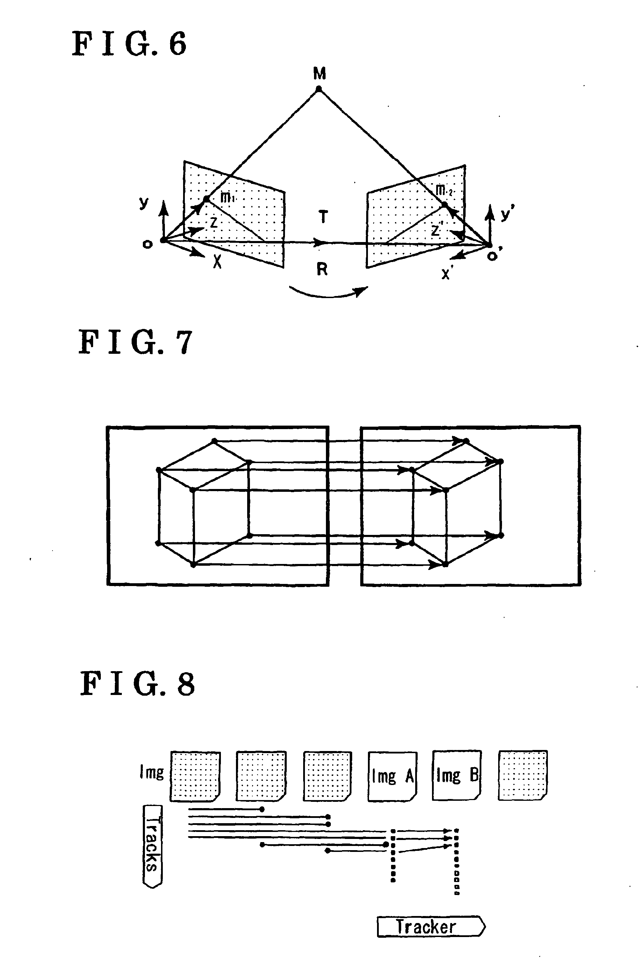

The above-described reconstruction of the three-dimensional shape is carried out based upon the principles of triangulation by use of images as disclosed for example in the aforementioned non-patent document 2 and are described hereinafter with reference to FIGS. 6 through 8. As illustrated in FIG. 6, when observing an identical point M in the space at least from two camera positions, as shown as o and o' on the left and right sides in FIG. 6, light rays in the air connecting the optical center of the camera and points $m_1$ and $m_2$ observed in the images shot by the respective cameras can be determined. An intersecting point of both light rays represents the point M in the space. In this case, the three-dimensional point M in a scene of interest needs to be identified between the images.

In order to reconstruct the three-dimensional shape depending on the shift of the scene of interest, a corresponding stereo can be applied to determine at which position and posture of the camera each time-serial image was shot, as far as the correspondences have been calibrated by a dead-reckoning system. However, it is necessary to identify the corresponding points in the time-serial images which are shot by the camera so as to contain the identical points, thereby enabling to reconstruct the three-dimensional shape in the scene of interest.

Detection of the feature point in the scene of interest can be carried out by detecting some feature points which characterize the object in the scene of interest. The feature points in this case correspond to points possessing appropriate characteristics which are traceable along with the processing sequence of the image. An automatic correlation shown as formula 1 discussed below can be applied for detecting the feature points. A matrix A functions to average derivatives of the image signal included in a window region W containing a point p (x, y) in the image. Thus, an optimal feature point can be obtained by using the matrix A. That is, the feature point suitable for the tracking generally corresponds to a corner and an intersecting point of lines (e.g., a block dot at a corner of the left side of the drawing in Fig. 7) and the matrix A detects this sort of feature point. According to formula 1 below, I (x, y) shows a function of the image, $I_x$ shows a gradient of the image relative to an x-axis, $I_y$ shows a gradient of the image relative to a y-axis, and $(x_k, y_k)$ shows an image point in the window W having (x, y) as a centre of the image.

[Formula 1]

$$A(x,y) = \begin{bmatrix} \sum_w (I_x(x_k, y_k))^2 & \sum_w (I_x(x_k, y_k) I_y(x_k, y_k)) \\ \sum_w (I_x(x_k, y_k) I_y(x_k, y_k)) & \sum_w (I_y(x_k, y_k))^2 \end{bmatrix}$$

An Image sequence I (u, t) having a coordinate of an image point at u=[x, y]$^T$ is considered for feature tracking. Presuming that the brightness of the image does not change after elapsing a minute time when a sample cycle is sufficiently short, formula 2 is obtained.

**[Formula 2]**

$$I(\mathbf{u}, t) = I(\,\delta\,(\mathbf{u}),\, t + \,\tau\,)$$

With the formula 2, $\delta(u)$ represents a motion field (i.e., projection of a three-dimensional motion vector to the image). Because the sample cycle is sufficiently short, as shown in a formula 3, the motion or the shift of the image can be approximated using only a translation element out of the motion elements including a rotation element and the translation element. "d" in the formula 3 represents a displacement vector.

**[Formula 3]**

$$\delta\,(\mathbf{u}) = u + d$$

In order to calculate the corresponding displacement vector d relative to each selected feature point and each tracked pair of points in the image sequence, a tracker is applied. In practice, because the motion model of the image cannot be recovered perfectly due to the influence of the noise, the above formula 2 does not function sufficiently. Accordingly, as shown in formula 4, the displacement vector d may be calculated by a sum of square difference. The displacement vector d, which minimizes a residual of the formula 4, is obtained and the feature points are tracked in the direction of the displacement vector d as illustrated in FIG. 7. "W" of the formula 4 represents a window for detecting the feature points with reference to the point u.

**[Formula 4]**

$$\varepsilon = \sum_{W} \left[ I(\mathbf{u} + \mathbf{d}, t + \tau) - I(\mathbf{u}, t) \right]^{2}$$

As illustrated in FIG. 8, a track is a set of points characterising an identical object among the image sequences. Image points of each track correspond to projections of respective three-dimensional points. Although the tracks of an image sequence should not be lost, the tracking has to be stopped when the tracking points cannot be detected because the points to be tracked are out of the image or are hidden, or due to noise. Hereinafter, starting from a set of the feature points detected in a first image, the feature points of the previous image, i.e., Img A in Fig. 8, are tracked in the next image, i.e., Img B in Fig. 8. In case that some of the feature points in the Img A is not tracked in the Img B, new feature points are searched in the Img B and the new feature points are referred to as starting points for the tracking thereafter.
When a distance between the position M and the camera position in the three-dimensional space is z, formula 5 is obtained with the projection at a position m in the image. With the formula 5, a distance f is referred to as a focal length. Hereinafter, the distance f is defined with a unit length at 1 so as to simplify the formula 5. In the foregoing manner, a geometric relation for shooting the feature point in the space, such as a peak point of an object, by use of two cameras can be described as illustrated in FIG. 6.

**[Formula 5]**

$$M = \frac{Z}{f}\,\mathbf{m} \qquad\qquad M = Z\,\mathbf{m}$$

As illustrated in FIG. 6, the second camera coordinate system can be produced by giving rotation matrix R and translation vector T to the first camera coordinate system with a central focus on the original viewpoint o. The translation vector T is referred to as a baseline vector. The parameters {T, R} depict a relative positional and postural relationship between these two camera viewpoints. Therefore, when the object is shot by a single camera, the camera movement such as translation and rotation can be measured by the dead reckoning system.

Further, as illustrated in FIG. 6, the projections of the position M in the three-dimensional space are assumed to be positioned at the coordinates $m_1$ and $m_2$ in each image. The direction of the feature point from the viewpoint o' of the second camera coordinate system is depicted with a vector $m_2$ with respect to the second camera coordinate. However, the second camera coordinate was produced by giving rotation matrix R to the first camera coordinate system. Therefore, the direction of the feature point from the viewpoint o' is depicted with $Rm_2$ with respect to the first camera coordinate system, wherein formula 6 is obtained.

$$[\text{Formula 6}]$$

$$Zm_1 = T + Z'Rm_2$$

The aforementioned distances Z and Z' are calculated in accordance with a formula 7.

$$[\text{Formula 7}]$$

$$Z = \frac{(T \times Rm_2, m \times Rm_2)}{\|m_1 \times Rm_2\|^2}, \qquad Z' = \frac{(T \times m_1, m_1 \times Rm_2)}{\|m_1 \times Rm_2\|^2}$$

As described above; the distances Z and Z' in the three-dimensional space can be restored depending on the coordinates $m_1$ and $m_2$ of the projections onto the respective images from the two different camera viewpoints. The aforementioned track is the set of points in the target view. Therefore, the three-dimensional shape can be restored based upon the calculation in accordance with the formula 7 regarding all tracks.

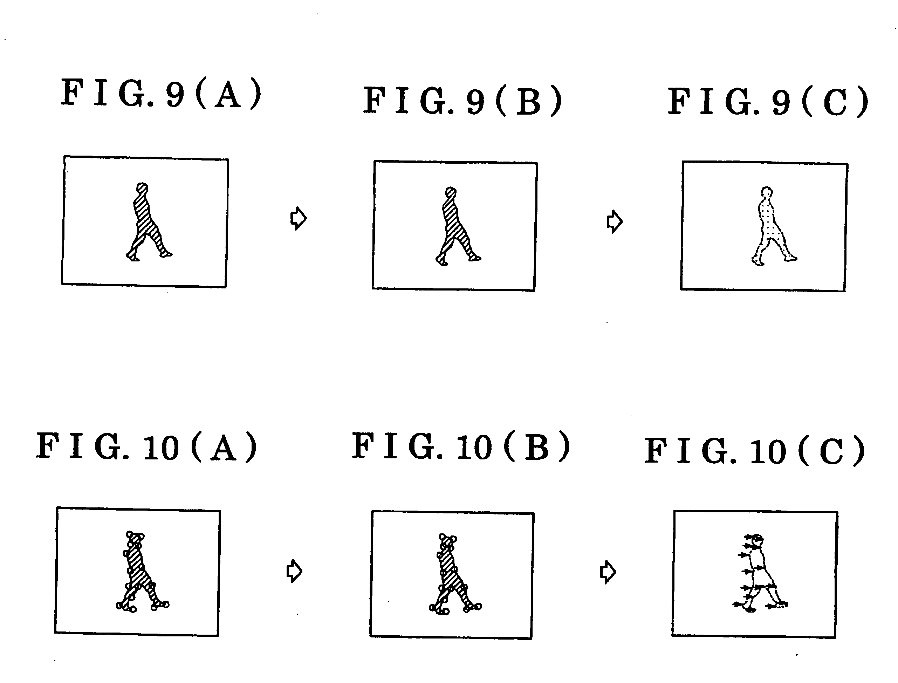

The configuration of the moving obstacle detecting means MO shown from FIG.1 through FIG.3 will be further described with reference to FIG.9.

When the movable body such as the vehicle 1 in FIG.4 is in static state, an image data shown in FIG.9 (A) shot by the image capturing means CD (camera 2) and stored at a predetermined time before ($t=t_{0-1}$) is compared to an image data shown in FIG.9 (B) shot by the image capturing means CD (camera 2) and stored at a current time ($t=t_0$). In such case, both images may be exactly the same if there is no moving obstacle (a human body in FIG.9) in the target view (scene, landscape), however, both images may be differ as shown in FIG.9 (C) if the moving obstacle exists in the target view. Focusing on residual obtained by arithmetical operation and logical operation of the two images. When there is no moving obstacle, the residual will be zero, on the other hand, when moving obstacle exists in the view, a value corresponding to the size and moving speed of the object (obstacle) can be obtained.

Here is another example according to the comparison between an image data shown in FIG.9 (A) shot by the image capturing means CD (camera 2) and stored at a predetermined time before ($t=t_{0-1}$) and an image data shown in FIG.9 (B) shot by the image capturing means CD (camera 2) stored at a current time ($t=t_0$). Firstly, a feature point in the image shot and stored at the predetermined time before ($t=t_{0-1}$) is detected. Coordinate and number of such feature point are determined depending on the shape and pattern of the moving obstacle. Then, it is determined whether or not the moving obstacle exists in the target view (landscape) by tracking the movement of the feature point between the image shot and stored at the predetermined time before ($t=t_{0-1}$) and the image shot and stored at the current time ($t=t_0$), in other words, determining whether or not moved feature point exists.

The existence of the moving obstacle (a human body in Fig.9) can be determined through aforementioned processes when the image capturing means CD (camera 2) is in static state, in other word, the vehicle 1 where the camera 2 is mounted is in static state, however, the moving obstacle cannot be detected properly when the vehicle 1 is moving because it is difficult to detect the moving obstacle from the target view (landscape) in which all elements in the shot image is moved along with the movement of the vehicle 1. To detect the moving obstacle properly, the movable body surrounding monitoring apparatus according to the present invention uses the aforementioned means for reconstructing a three-dimensional shape based upon the position and posture of the movable body.

The object around the vehicle 1 (moving body) is recognized by using information related to the movement of the vehicle 1, images shot before and after the object moves, that is the image data of a moving obstacle (human body in FIGs.10) shown in FIG.10 (A) shot by the image capturing means CD (camera 2) and stored at a predetermined time before (t=t$_{0-1}$) and an image data shown in FIG.10 (B) shot by the image capturing means CD (camera 2) and stored at a current time (t=t$_0$), and reconstructed three-dimensional coordinates by detecting and tracking feature points among each images.

In this point, when the object in the target view (landscape) is in static state, corresponding reconstructed three-dimensional coordinates are exactly the same among plural images, however, when the object in the target view is moving, each reconstructed three-dimensional coordinates differs. Thus, whether or not there is a moving obstacle (human body in FIG.10) is determined in the target view (landscape) (FIG.10(c)) even if the vehicle 1 (moving body) is moving by evaluating the difference among the three-dimensional coordinates in each image, and the positions of the three dimensional coordinates become positions of the tracking feature points.

In the aforementioned example, the images shot by the camera 2 is used for detecting the moving obstacle in the target view (landscape), however, the moving obstacle can be detected in the same manner using a supersonic type sensor, an optical sensor and an electric wave sensor. Thus, such sensors may be used as a image capturing means CD.

As shown in FIG. 1 through FIG.3, the dead reckoning system as the moving condition detecting means DS for detecting the moving state of the vehicle can be configured with at least one sensor for detecting the vehicle dynamic state such as the vehicle running speed, the steering condition, the vehicle turning condition and the like. According to the embodiments of the present invention, the dead reckoning system can be configured with the vehicle wheel speed sensor 7 and can be applied as the movable body information detecting means MB. In the foregoing manner, the object (obstacle in static condition or movable condition) existing in the imaged region can be specified based upon the vehicle positions and postures at the first and second conditions, and the corresponding points identified between the specified images by extracting and tracking the feature points in the images shot by the camera 2 at the first and second conditions, wherein the three-dimensional coordinate in the imaged region can be estimated.

According to the embodiments of the present invention, the dead-reckoning system is constructed for detecting the vehicle state, i.e. the position and the direction (i.e., angle about the vertical axis) of the vehicle 1, based on the wheel speed signals detected by the vehicle wheel speed sensors 7. The movable body information detecting means MB is configured with the dead reckoning system.

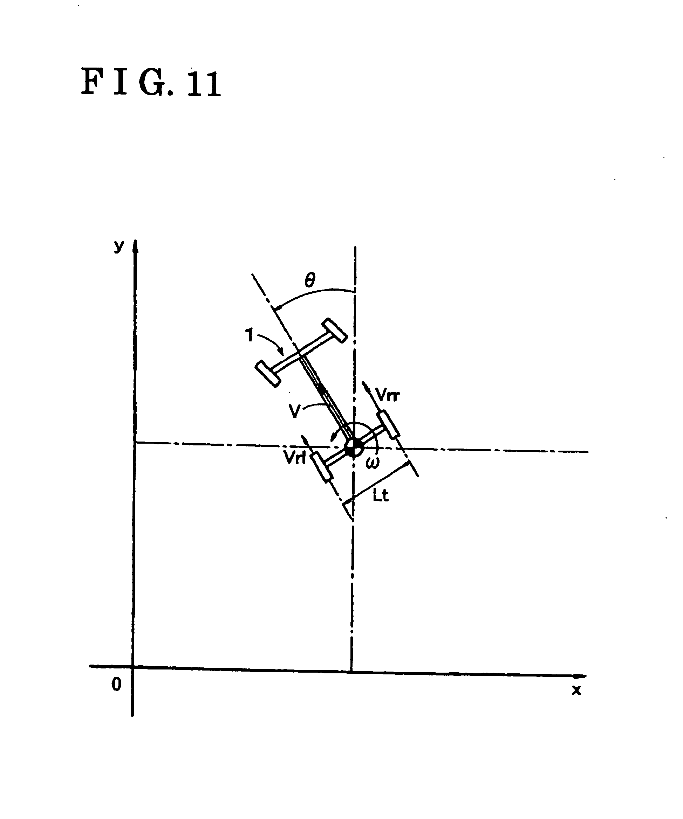

Next, the following description will be given for explaining a method of detecting the condition of the vehicle 1 according to the embodiments of the present invention. As illustrated in FIG. 11, the position and the direction of the vehicle 1 may be defined with three variables (x, y, θ). When the vehicle speed is defined as a vehicle speed V and the angular velocity of the vehicle 1 is defined as an angular velocity ω, the following formula is established between the vehicle state, the vehicle speed, and the angular velocity. That is:

$$dx/dt = V \cdot \cos\theta,$$

$$dy/dt = V \cdot \sin\theta,$$

and

$$\dot{d\theta}/dt = \omega.$$

Although the vehicle speed V and the angular velocity ω cannot be directly measured, these values can be determined using the wheel speed of the rear wheels on the right and left detected by the wheel speed sensors as follows. That is:

$$V = (Vrr + \dot{Vrl}) / 2,$$

and

$$\omega = (Vrr - Vrl) / Lt,$$

wherein Vrr stands for the wheel speed of the rear right wheel and Vrl stands for the wheel speed of the rear left wheel, and Lt stands for a tread length of the vehicle.

According to the foregoing formulas, the vehicle state $(x, y, \theta)$ at a time t can be shown in the following manner when an initial value $(x_0, y_0, \theta_0)$ when t equals to zero is determined.

That is, the vehicle state $(x, y, \theta)$ will be determined as shown in a formula 8.

[Formula 8]

$$x = x_0 + \int_{t=0}^{t} \dot{x} dt$$

$$y = y_0 + \int_{t=0}^{t} \dot{y} dt$$

$$\theta = \theta_0 + \int_{t=0}^{t} \dot{\theta} dt$$

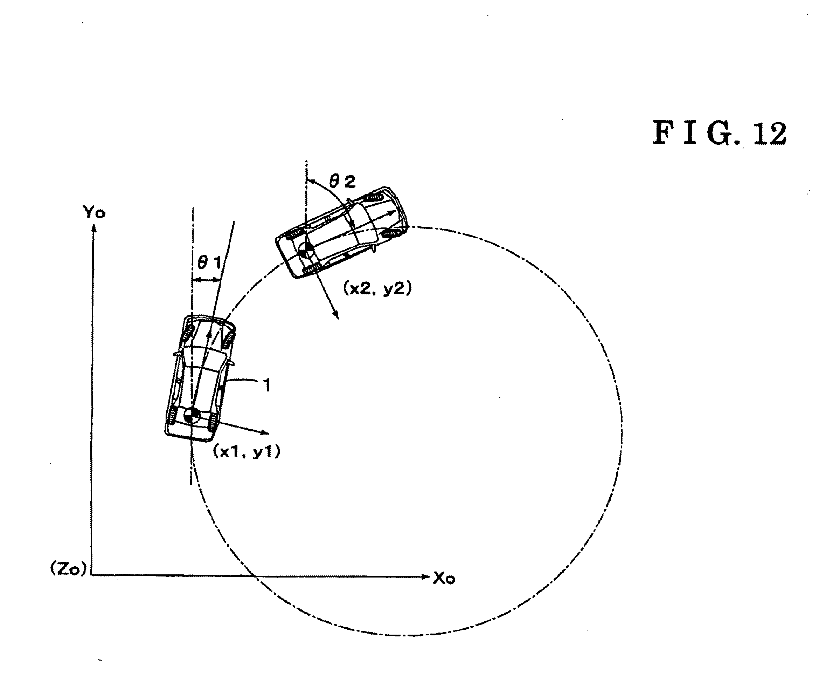

FIG. 12 shows the condition of the vehicle performing a turning movement on $X_0$-$Y_0$ plane (i.e., $Z_0=0$) pursuant to the three-dimensional coordinates $(X_0, Y_0, Z_0)$. The positional relationship from a first vehicle condition determined by a first position (i.e., coordinates $(x_1, y_1)$) and a first direction (i.e., angle $\theta_1$) to a second vehicle condition determined by a second position (i.e., coordinates $(x_2, y_2)$) and a second direction (i.e., angle $\theta_2$) can thus be determined. Although the vehicle position (i.e., coordinates) and the direction (i.e., angle) are detected based on the detected wheel speed by the wheel speed sensors 7 for the rear wheels on the right and left, the position and direction of the vehicle 1 may be determined by use of the steering angle sensor 4, a yaw rate sensor (not shown), a distance sensor (not shown), or combinations of those. Although FIG. 12 shows the plain circle turning movement of the vehicle 1, the vehicle movement can be tracked in accordance with combination of plural arcs or direct lines based upon the above-described coordinates and directions of the vehicle 1.

Meanwhile, as illustrated in FIG. 13, the three-dimensional environment estimated by the three-dimensional environment information constructing means RC is stored in a memory as a three-dimensional map denoted with broken lines with reference to the three-dimensional coordinates $(X, Y, Z)$. There are the other vehicles which are not the own vehicle and shot by the camera 2, the obstacles, the buildings which are shot by the camera 2, and the like in the three-dimensional map. However, their illustrations are omitted. Three-dimensional maps are denoted with broke lines in FIGS. 14 through 18 as well. The three-dimensional coordinate in FIG. 12 is corresponded relative to the three-dimensional map. That is, the relative positional and postural relationship of the vehicle 1 to the surrounding environment is corrected by the information combining means CB. More particularly, the vehicle 1 illustrated in FIG. 12 is positioned in the three-dimensional map denoted with the broken lines in FIG. 13. Therefore, the position (coordinate) of the vehicle 1 and the posture, i.e. the direction (angle) of the vehicle 1 are specified in the three-dimensional map.

The specified view is created by the specified view creating means SV when a camera is assumed to have been oriented in a predetermined direction on the vehicle 1 positioned at a predetermined point in the third-dimensional environment containing the environment around the vehicle 1. An image of the view shot by this virtual camera is displayed in the monitor 8 as the displaying means VD. FIG. 14 shows which region is contained in a view shot by the virtual camera 2a in accordance with the third-dimensional map with the vehicle 1 after moving. In other words, a region denoted with Sa in FIG. 14 is contained in the view shot by the virtual camera 2 and is displayed as a virtual image in the monitor 8. Hereinafter, the region displayed in the monitor 8 is referred to as a displayed view.

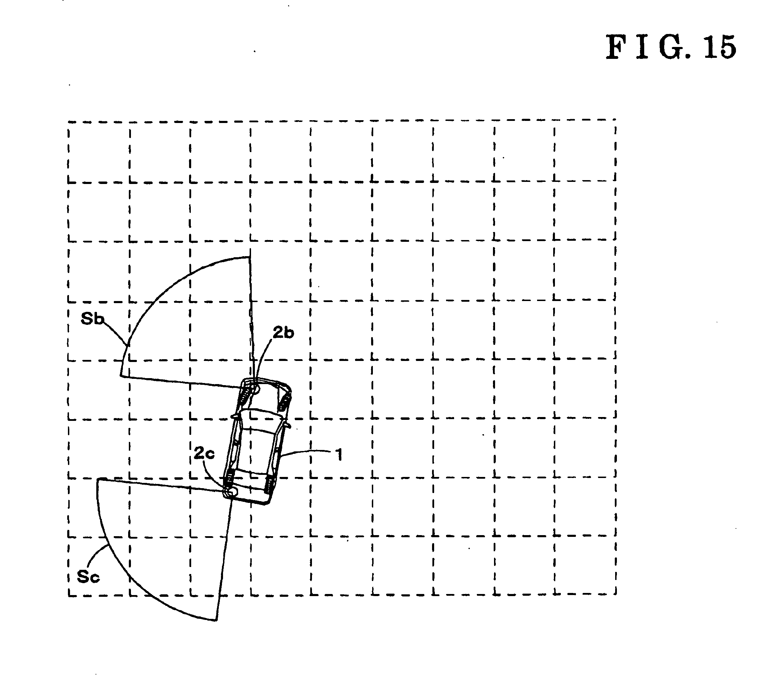

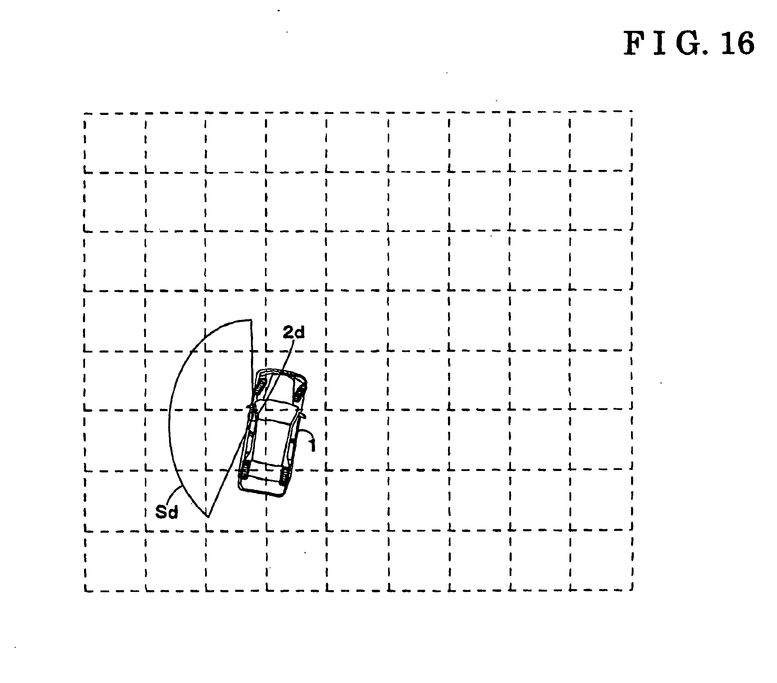

FIG. 15 shows displayed views Sb and Sc contained in views shot by a virtual camera 2b mounted at a front left comer of the vehicle 1 and by a virtual camera 2c mounted at a rear left corner thereof in accordance with the third-dimensional map with the vehicle 1 after moving. In the same manner, FIG. 16 shows a displayed view Sd contained in a view shot by a virtual camera 2d in accordance with the third-dimensional map with the vehicle 1 after moving.

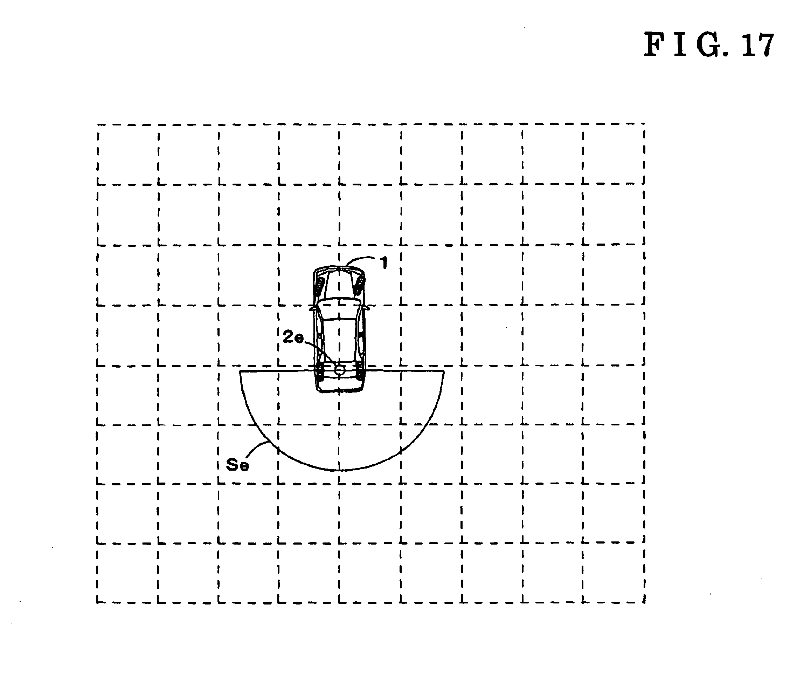

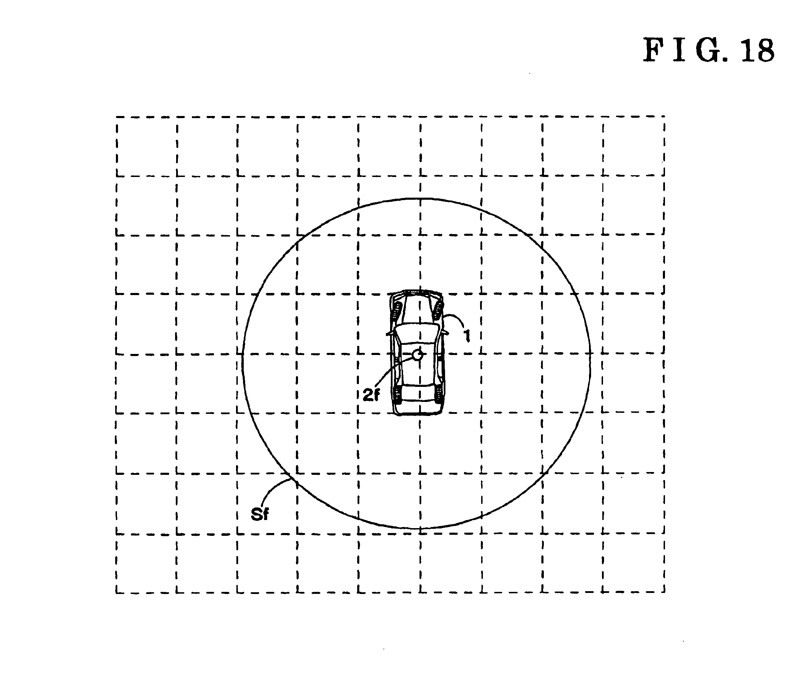

The angles shot by the cameras illustrated in FIGS. 14, 15, and 16 are designed to be substantially similar to the angle shot by the actual camera 2. Alternatively, as illustrated in FIG. 17, a virtual camera 2e can be mounted on the vehicle 1 so as to set a displayed view Se at 180 degrees. Therefore, the monitor 8 can display a virtual image which also contains views around the left and right corners which cannot be shot by the actual camera 2. Further, as illustrated in FIG. 18, a virtual camera 2f can be mounted above the vehicle 1 so as to set a displayed view Sf at 360 degrees. The monitor 8 can display a virtual image containing this view shot by the virtual camera 2f.

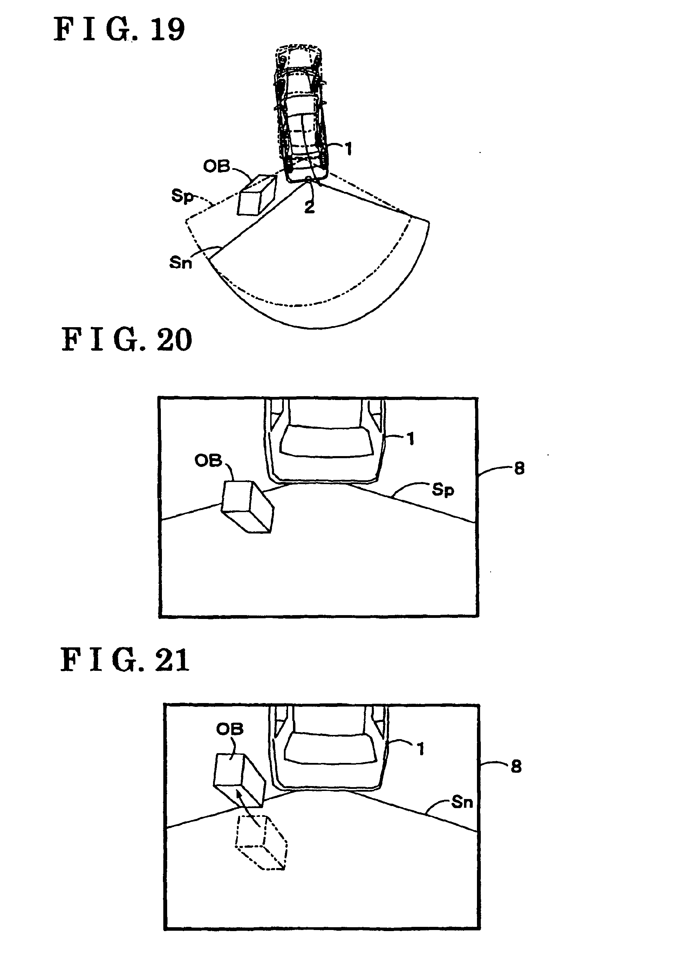

The above-described virtual image varies depending on the movement of the vehicle 1, i.e. depending on shifting of the view in response to the movement of the virtual cameras. According to the embodiments of the present invention, the monitor 8 can display a virtual image containing the obstacle shot during the vehicle 1 is moving when needed. For example, as illustrated in FIG. 19, when the vehicle 1 is located at a position denoted with double dashed lines, the obstacle OB being in static state appears in a region Sp denoted with double dashed lines, wherein the monitor 8 displays an image containing the obstacle OB. Once the vehicle 1 is moved from the aforementioned position in an arrow direction down to a position denoted with a solid line, the obstacle OB disappears in a region Sn denoted with a solid line, wherein the displayed image in the monitor 8 does not contain the obstacle OB. In response to further movement of the vehicle 1 in the arrow direction in FIG.19 from the position denoted with the solid line, the obstacle OB approaches to a portion between the rear left corner of the vehicle 1 and the front left thereof. In this case, the obstacle OB deviates from a view which can be shot by the camera 2, wherein the monitor 8 may not display the obstacle approaching to the vehicle 1.

Under the above-described condition between the vehicle 1 and the obstacle OB, if the virtual view shown in FIG.17 shot by the virtual camera 2e above the vehicle 1 is displayed in the monitor 8, the displayed image can contain both corners of the vehicle 1 as illustrated in FIGS. 20 and 21. As illustrated in FIG. 21, a relative position of the obstacle OB being in static state to the vehicle 1 is shifted in an arrow direction illustrated in FIG. 21 from the position denoted with the double dashed lines. The obstacle OB is then illustrated with a solid line. As described above, even if the obstacle OB deviates from an actual view shot by the actual camera 2, the driver can recognize the position of the obstacle OB through the screen of the monitor 8.

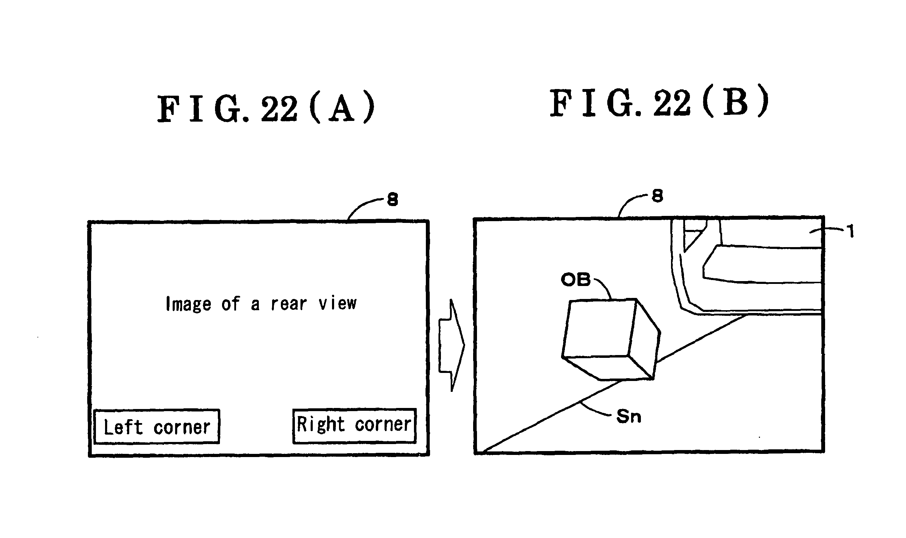

According to the embodiments of the present invention, the instruction inputting means SE and the switching means CH switches an image to be displayed in the monitor 8 between the image actually shot by the actual camera 2 and a virtual image such as the images illustrated in FIGS. 20 and 21. More particularly, as illustrated in FIG. 22, the monitor 8 possesses a displayed screen (A) which shows not only the image (not shown) of the rear view of the vehicle 1 but also touch panel switches indicating "Left corner" and "Right corner". For example, when the driver or user touches the touch panel switch for the left corner shown in the displayed screen (A), the displayed screen (A) is switched to a screen (B) which zooms the left corner of the vehicle 1. In this case, the driver can easily recognize the obstacle OB approaching to the left corner of the vehicle 1. As described above, it is preferable that the portion of the vehicle 1 is zoomed in the monitor 8 as the driver intends. Alternatively, the display illustrated in FIG. 20 can be moved from side to side or can be auditorily warned about the obstacle OB approaching to the vehicle 1.

According to the image displayed in the monitor 8, when an obstacle exists within a predetermined distance in the view of the camera 2, for example, within 2 metre, and the obstacle deviates from the view of the camera 2 and moves behind the camera 2, it is not preferable to continue displaying a virtual image of such moving obstacle for a long time. Thus, the movable body surrounding monitoring apparatus according to the embodiment of the present invention is controlled in at least one of following ways based on the aforementioned predetermined conditions.

(1) Displaying the virtual image is prohibited when a time equal to or more than a predetermined time pasts after it is determined that the moving obstacle exists in the view of the camera 2, and the obstacle deviates from the view of the camera 2 and moves to behind the camera 2.

(2) Displaying the virtual image is prohibited when the vehicle 1 (moving body) moves equal to or more than a predetermined distance from the position where it is determined that the moving obstacle exists in the view of the camera 2, and the obstacle deviates from the view of the camera 2 and moves to behind the camera 2.

(3) Displaying the virtual image is prohibited when the vehicle 1 (moving body) rotates equal to or more than a predetermined angle from the position where it is determined that the moving obstacle exists in the view of the camera 2, and the obstacle deviates from the view of the camera 2 and moves to behind the camera 2.

Alternatively, the movable body surrounding monitoring apparatus according to the embodiment of the present invention is controlled in at least one of following ways based on the aforementioned predetermined conditions.

(1) The virtual image is switched to an actual image shot by the camera 2 when a time equal to or more than a predetermined time pasts after it is determined that the moving obstacle exists in the view of the camera 2, and the obstacle deviates from the view of the camera 2 and moves to behind the camera 2.

(2) The virtual image is switched to an actual image shot by the camera 2 when the vehicle 1 (moving body) moves equal to or more than a predetermined distance from the position where it is determined that the moving obstacle exists in the view of the camera 2, and the obstacle deviates from the view of the camera 2 and moves to behind the camera 2.

(3) The virtual image is switched to an actual image shot by the camera 2 when the vehicle 1 (moving body) rotates equal to or more than a predetermined angle from the position where it is determined that the moving obstacle exists in the view of the camera 2, and the obstacle deviates from the view of the camera 2 and moves to behind the camera 2.

When plural cameras (e.g. first camera, second camera) are mounted to the movable body, and the moving obstacle is likely to exist within a view of the second camera after the moving obstacle moves behind the first camera, the virtual image may be switched to an actual image shot by the second camera.

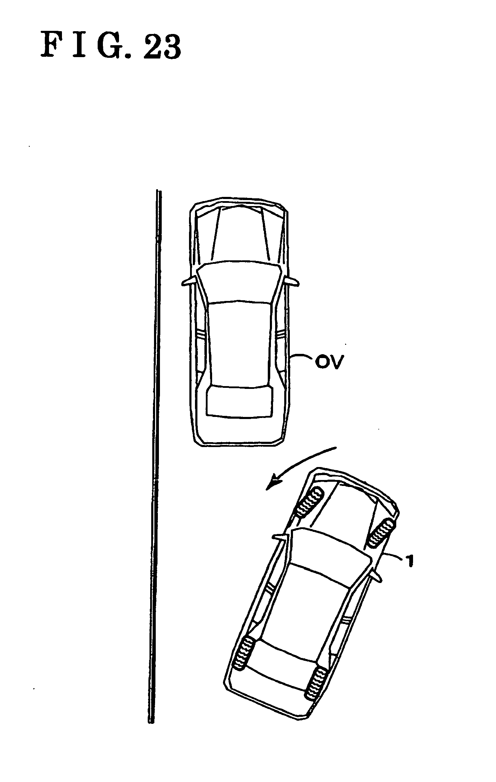

As described above, the obstacle OB around the vehicle 1 can be recognized by the user, especially by the driver, in a three-dimensional environment. Optimizing this matter, according to the embodiments of the present invention, when the obstacle within easy reach from the vehicle 1 deviates from the view actually shot by the camera 2, the monitor 8 can automatically display environments outside the view by the camera 2 as a virtual image. For example, as illustrated in FIG. 23, when the vehicle 1 is parallel parked at the left-hand side of the road, the vehicle 1 is moved rearward and turned in an arrow direction, i.e. in a counterclockwise direction. In this case, the other vehicle OV approaching to the vehicle 1 within the predetermined distance can be recognized as a moving obstacle. The specific view can be created by the specific view creating means SV so as to contain the vehicle OV. As described above, a virtual image including a front left comer portion of the vehicle 1 can be displayed or switchably selected in the monitor 8 as illustrated in FIG. 24 automatically or following the driver's intention.

As described above, the surrounding environment including the other vehicle OV is actually shot by the camera 2 when the vehicle 1 is moved rearward for the parallel parking after forward moving in a region illustrated in FIG. 23. The information of the surrounding environment including the other vehicle OV has been stored as a third-dimensional environment map in the memory (not shown). Therefore, the position (coordinate) and posture (direction) of the vehicle 1 can be specified in the three-dimensional environment map. When a distance between the front left corner portion of the vehicle 1 and the rear portion of the other vehicle OV is judged to be less than a predetermined distance, the virtual image shown in FIG. 24 can be automatically displayed in the monitor 8. At this point, when the other vehicle OV moves to be determined as a moving obstacle being within 2 meter from the vehicle 1, and the aforementioned predetermined condition is fulfilled, the virtual image is switched to the actual image. In this case, the driver also can be auditorily warned instead of display in the monitor 8.

Further, when the electronic control unit 10 judges that the vehicle 1 may become in contact with the other vehicle OV, a warning notice can be displayed in the monitor 8 with some alarm. Still further, when other obstacle such as the other vehicle OV is detected to be located within a region at a predetermined distance away from the own vehicle, a virtual image containing the obstacle can be automatically displayed in the monitor 8. The driver can be auditorily alarmed at the same time as the display in the monitor 8.

As illustrated in FIG. 3, the movable body surrounding monitoring apparatus includes the track estimating means TR for estimating the moving track of the movable body based upon the information detected by the movable body information detecting means MB. The specific view creating means SV is provided with the overlapping means OL for overlapping the moving track estimated by the track estimating means TR onto the specific view. For example, when the vehicle 1 is parallel parked at the right-hand side on the road as illustrated in FIGS. 25 through 27, the overlapping means OL overlaps a recommended course for parking asist RC and an expected moving track EC of the vehicle 1. These overlapped images can be displayed as a virtual image in the monitor 8. The expected moving track EC of the vehicle 1 for the vehicle rearward movement can be calculated based upon an information representing the vehicle operation condition such as the steering angle detected by the steering angle sensor 4 illustrated in FIG. 5. The calculation of the expected moving track EC can be calculated in accordance with a known method for a conventional parking asist such that the description will be omitted hereinafter.

FIGS. 25, 26, and 27 show a parking space PS, respectively. As described above, even if the vehicle 1 is provided with the camera 2 only at the rear portion thereof, the information of the surrounding environment shot by the camera 2 is stored in the memory as the third-dimensional environment map while the vehicle 1 has been moving rearward to a certain degree after the forward movement in the region illustrated in each figure. Therefore, the monitor 8 can display the virtual image in the region illustrated in each FIG. 25, 26, and 27 when the vehicle 1 is further moving rearward.

According this embodiment, the obstacle such as a vehicle within an area shown in FIG.25 through FIG.27 moves and is determined as a moving obstacle being (by the moving obstacle detecting means MO), and the aforementioned predetermined condition is fulfilled, the virtual images shown in FIG.25 through FIG.27 can be switched to the actual images.

As described above, when the a moving obstacle exists in the shot image, and the predetermined condition is fulfilled, image displaying is controlled as aforementioned above, for example, the virtual image is switched to the actual image. Thus, the image is displayed preferably, not continuously displaying the virtual image of the obstacle before it moves. In addition, according to the embodiments of the present invention, the virtual image can be displayed in the monitor 8 by use of the single camera 2. Therefore, the camera does not have to be mounted at a portion such as a vehicle comer which may not be preferable from a technical or designing point of view. Further, a desired virtual image can be displayed in the monitor 8 when needed based upon the information of the environment surrounding the vehicle 1 actually shot by the camera 2, independently from the position and orientation of the camera 2 mounted on the vehicle 1. According to the embodiments of the present invention, the camera 2 mounted at the rear portion of the vehicle 1 illustrated in FIG. 4 is applied as the image capturing means CD. Alternatively, a camera which is mounted at a side portion of the vehicle 1 or a front portion thereof can be applied as the image capturing means CD.

## Claims

1.  A movable body surrounding monitoring apparatus wherein that the apparatus comprises:

    an environment information detecting means (SR) for detecting and storing information about an environment around a movable body;
    a movable body information detecting means (MB) for detecting and storing position and posture of the movable body;
    an information combining means (CB) for combining the information detected by the movable body information detecting means (MB) and the information detected by the environment information detecting means (SR), correcting a relative relationship of position and posture between the movable body and the environment around the movable body, and outputting information of such relative relationship;
    a specific view creating means (SV) for creating a specific view of the movable body with reference to information of the environment around the movable body at a specific position based on the information outputted from the information combining means (CB);
    a displaying means (VD) for displaying the specific view created by the specific view creating means (SV) as an image; **characterized by**
    a moving obstacle detecting means (MO) for detecting an obstacle movable around the movable body based on the information detected by the environment information detecting means (SR); and
    a display controlling means (VC) for controlling displaying the specific view at the displaying means (VD) based on the detected result by the moving obstacle detecting means (MO).

2.  A movable body surrounding monitoring apparatus according to claim 1, wherein the display controlling means (VC) controls displaying the specific view on the displaying means (VD) when a predetermined condition is fulfilled after the moving obstacle detecting means (MO) detects the moving obstacle.

3.  A movable body surrounding monitoring apparatus according to claim 1, wherein the environment information detecting means (SR) includes:

    at least one image capturing means (CD) mounted on the movable body for obtaining an image of the environment around the movable body and for outputting such image, and the image capturing means obtaining at lease two images shot at a first state and at a second state of the movable body when the movable body moves from the first state to the second state;
    a feature point tracking means (PF) for detecting a coordinate of a feature point in the first image at the first state of the movable body and a coordinate in the second image at the second state corresponding to the feature point in the first image at the first state;
    a moving condition detecting means (DS) for detecting position and posture of the movable body at least at the first and second states; and
    a three-dimensional environment information constructing means (RC) for constructing a three-dimensional environment information of the feature point based upon the position and posture of the movable body at the first and second states detected by the moving condition detecting means (DS), the coordinate of the feature point in the image at the first state of the movable body and the coordinate in the second image at the second state corresponding to the feature point in the first image at the first state.

4. A movable body surrounding monitoring apparatus according to claim 3, wherein the moving obstacle detecting means (MO) detects the moving obstacle in an image shot by the image capturing means (CD), and the display controlling means (VC) controls displaying the image of the specific view at the displaying means (VD) when a predetermined condition is fulfilled after the moving obstacle detecting means (MO) detects the moving obstacle.

5. A movable body surrounding monitoring apparatus according to claim 4, wherein the display controlling means (VC) controls displaying the image of the specific view at the displaying means (VD) when at least one of following conditions is true:

(1) a time a equal to or more than a predetermined time pasts after the moving obstacle disappears from the image shot by the image capturing means (CD);
(2) the movable body is moved equal to or more than a predetermined distance, and
(3) the moving obstacle rotates equal to or more than a predetermined angle.

6. A movable body surrounding monitoring apparatus according to claims 3 through 5, wherein the moving obstacle detecting means (MO) detects the moving obstacle by calculating a differential by means of at least one of arithmetical operation or logical operation between two images, the first image shot at the first state and the second image shot at the second state, shot by the image capturing means (CD) when the movable body is in static condition.

7. A movable body surrounding monitoring apparatus according to claim 3 through claim 5, wherein the moving obstacle detecting means (MO) detects the moving obstacle by calculating a differential by means of at least one of arithmetical operation or logical operation between two images, between an estimated second image at the second state based on the first image at the first state and the detected information at the movable body information detecting means MB, and the second image at the second state by means of at least one of arithmetical operation or logical operation, shot by the image capturing means (CD) when the movable body is moving.

8. A movable body surrounding monitoring apparatus according to any one of claims 3 through 7, wherein the moving condition detecting means (DS) of the environment information detecting means SR detects the position and posture of the movable body at the first and second states based upon the information detected by the movable body information detecting means (MB).

9. A movable body surrounding monitoring apparatus according to any one of claims 1 through 8, further comprising:

an instruction inputting means (SE) for inputting an instruction related to the specific view by an operator of the movable body, and
a switching means (CH) included in the specific view creating means (SV) for switching the specific view to a view based upon the instruction from the operator in response to a result of inputting by the instruction inputting means (SE).

10. A movable body surrounding monitoring apparatus according to any one of claims 1 through 8, further comprising:

a track estimating means (TR) for estimating a moving track of the movable body based upon the information detected by the movable body information detecting means (MB), and
an overlapping means (OL) included in the specific view creating means (SV) for overlapping the moving track estimated by the track estimating means (TR) on the specific view, wherein the displaying means (VD) displays an image overlapping the estimated moving track on the specific view.

**Patentansprüche**

1. Umfeldbeobachtungsvorrichtung für einen beweglichen Körper, mit:

einer Umgebungsinformationserfassungseinrichtung (SR) zum Erfassen und Speichern von Informationen über eine Umgebung um einen beweglichen Körper;
einer Informationserfassungseinrichtung eines beweglichen Körpers (MB) zum Erfassen und Speichern einer Position und Haltung des beweglichen Körpers;

einer Informationskombiniereinrichtung (CB) zum Kombinieren der durch die Informationserfassungseinrichtung eines beweglichen Körpers (MB) erfassten Informationen und der durch die Umgebungsinformationserfassungseinrichtung (SR) erfassten Informationen, Korrigieren einer relativen Beziehung von Position und Haltung zwischen dem beweglichen Körper und der Umgebung um den beweglichen Körper, und Ausgeben von Informationen einer solchen relativen Beziehung;

einer Erzeugungseinrichtung einer spezifischen Ansicht (SV) zum Erzeugen einer spezifischen Ansicht des beweglichen Körpers mit Bezugnahme auf Informationen der Umgebung um den beweglichen Körper an einer spezifischen Position basierend auf den Informationen, die von der Informationskombiniereinrichtung (CB) ausgegeben werden;

einer Anzeigeeinrichtung (VD) zum Anzeigen der spezifischen Ansicht, die durch die Erzeugungseinrichtung einer spezifischen Ansicht (SV) erzeugt wurde, als ein Bild;

**gekennzeichnet durch**

eine Erfassungseinrichtung eines bewegten Hindernisses (MO) zum Erfassen eines Hindernisses, das um den beweglichen Körper beweglich ist, basierend auf den durch die Umgebungsinformationserfassungseinrichtung (SR) erfassten Informationen; und

eine Anzeigesteuereinrichtung (VC) zum Steuern eines Anzeigens der spezifischen Ansicht an der Anzeigeeinrichtung (VD) basierend auf dem erfassten Ergebnis **durch** die Erfassungseinrichtung eines bewegten Hindernisses (MO).

2.  Umfeldbeobachtungsvorrichtung für einen beweglichen Körper gemäß Anspruch 1, wobei die Anzeigesteuereinrichtung (VC) ein Anzeigen der spezifischen Ansicht auf der Anzeigeeinrichtung (VD) steuert, wenn eine vorbestimmte Bedingung erfüllt ist, nachdem die Erfassungseinrichtung bewegter Hindernisse (MO) das bewegte Hindernis erfasst.

3.  Umfeldbeobachtungsvorrichtung für einen beweglichen Körper gemäß Anspruch 1, wobei die Umgebungsinformationserfassungseinrichtung (SR) umfasst:

mindestens eine Bilderfassungseinrichtung (CD), die an dem beweglichen Körper angebracht ist, zum Erhalten eines Bildes des Umfelds um den beweglichen Körper und zum Ausgeben eines solchen Bildes, und wobei die Bilderfassungseinrichtung zumindest zwei Bilder erhält, die in einem ersten Zustand und in einem zweiten Zustand des beweglichen Körpers aufgezeichnet werden, wenn sich der bewegliche Körper von dem ersten Zustand zu dem zweiten Zustand bewegt;

eine Merkmalspunktverfolgungseinrichtung (PF) zum Erfassen einer Koordinate eines Merkmalspunkts in dem ersten Bild in dem ersten Zustand des beweglichen Körpers und einer Koordinate in dem zweiten Bild in dem zweiten Zustand entsprechend dem Merkmalspunkt in dem ersten Bild in dem ersten Zustand;

eine Bewegungsbedingungserfassungseinrichtung (DS) zum Erfassen einer Position und Haltung des beweglichen Körpers in zumindest dem ersten und dem zweiten Zustand; und

eine Erstelleinrichtung dreidimensionaler Umgebungsinformationen (RC) zum Erstellen von dreidimensionalen Umgebungsinformationen des Merkmalspunkts basierend auf der Position und Haltung des beweglichen Körpers in dem ersten und zweiten Zustand, die durch die Bewegungsbedingungserfassungseinrichtung (DS) erfasst werden, der Koordinate des Merkmalspunkts in dem Bild in dem ersten Zustand des beweglichen Körpers und der Koordinate in dem zweiten Bild in dem zweiten Zustand entsprechend dem Merkmalspunkt in dem ersten Bild in dem ersten Zustand.

4.  Umfeldbeobachtungsvorrichtung für einen beweglichen Körper gemäß Anspruch 3, wobei die Erfassungseinrichtung eines bewegten Hindernisses (MO) das bewegte Hindernis in einem durch die Bilderfassungseinrichtung (CD) aufgenommenen Bild erfasst und die Anzeigesteuereinrichtung (VC) ein Anzeigen des Bildes der spezifischen Ansicht an der Anzeigeeinrichtung (VD) steuert, wenn eine vorbestimmte Bedingung erfüllt ist, nachdem die Erfassungseinrichtung eines bewegten Hindernisses (MO) das bewegte Hindernis erfasst.

5.  Umfeldbeobachtungsvorrichtung für einen beweglichen Körper gemäß Anspruch 4, wobei die Anzeigesteuereinrichtung (VC) ein Anzeigen des Bildes der spezifischen Ansicht an der Anzeigeeinrichtung (VD) steuert, wenn mindestens eine der nachfolgenden Bedingungen erfüllt ist:

(1) eine Zeitspanne gleich oder länger als eine vorbestimmte Zeitspanne ist abgelaufen, nachdem das bewegte Hindernis von dem durch die Bilderfassungseinrichtung (CD) aufgenommenen Bild verschwindet;
(2) der bewegte Körper wird gleich oder weiter als eine vorbestimmte Distanz bewegt, und
(3) das bewegte Hindernis dreht sich gleich oder weiter als ein vorbestimmter Winkel.

**6.** Umfeldbeobachtungsvorrichtung für einen beweglichen Körper gemäß den Ansprüchen 3 bis 5, wobei die Erfassungseinrichtung eines bewegten Hindernisses (MO) das bewegte Hindernis durch Berechnen eines Differentials mit Hilfe zumindest einer arithmetischen Operation oder logischen Operation zwischen zwei Bildern, dem in dem ersten Zustand aufgenommenen Bild und dem in dem zweiten Zustand aufgenommenen Bild, die durch die Bilderfassungseinrichtung (CD) aufgenommen werden, erfasst, wenn sich der bewegte Körper in einem statischen Zustand befindet.

**7.** Umfeldbeobachtungsvorrichtung für einen beweglichen Körper gemäß den Ansprüchen 3 bis 5, wobei die Erfassungseinrichtung eines bewegten Hindernisses (MO) das bewegte Hindernis durch Berechnen eines Differentials mit Hilfe von zumindest einer arithmetischen Operation oder logischen Operation zwischen zwei Bildern, zwischen einem geschätzten zweiten Bild in dem zweiten Zustand basierend auf dem ersten Bild in dem ersten Zustand und den erfassten Informationen der Informationserfassungseinrichtung eines beweglichen Körpers (MB) und dem zweiten Bild in dem zweiten Zustand mit Hilfe zumindest einer arithmetischen Operation oder logischen Operation, das durch die Bilderfassungseinrichtung (CD) aufgezeichnet wird, erfasst, wenn sich der bewegliche Körper bewegt.

**8.** Umfeldbeobachtungsvorrichtung für einen beweglichen Körper gemäß einem der Ansprüche 3 bis 7, wobei die Bewegungsbedingungserfassungseinrichtung (DS) der Umgebungsinformationserfassungseinrichtung (SR) die Position und Haltung des beweglichen Körpers in dem ersten und zweiten Zustand basierend auf den durch die Informationserfassungseinrichtung eines beweglichen Körpers (MB) erfasst.

**9.** Umfeldbeobachtungsvorrichtung für einen beweglichen Körper gemäß einem der Ansprüche 1 bis 8, weiterhin mit:

einer Anweisungseingabeeinrichtung (SE) zum Eingeben einer Anweisung bezüglich der spezifischen Ansicht durch einen Bediener des beweglichen Körpers, und

einer Schalteinrichtung (CH), die in der Erzeugungseinrichtung einer spezifischen Ansicht (SV) enthalten ist, zum Schalten der spezifischen Ansicht zu einer Ansicht basierend auf der Anweisung von dem Bediener als Antwort auf ein Ergebnis eines Eingebens durch die Anweisungseingabeeinrichtung (SE).

**10.** Umfeldbeobachtungsvorrichtung für einen beweglichen Körper gemäß einem der Ansprüche 1 bis 8, weiterhin mit:

einer Streckenschätzeinrichtung (TR) zum Schätzen einer Bewegungsstrecke des beweglichen Körpers basierend auf den durch die Informationserfassungseinrichtung eines beweglichen Körpers (MB) erfassten Informationen, und

einer Überlagerungseinrichtung (OL), die in der Erzeugungseinrichtung einer spezifischen Ansicht (SV) enthalten ist, zum Überlagern der durch die Streckenabschätzeinrichtung (TR) geschätzten Strecke auf die spezifische Ansicht, wobei die Anzeigeeinrichtung (VD) ein Bild anzeigt, das die geschätzte Bewegungsstrecke über die spezifische Ansicht überlagert.

**Revendications**

**1.** Appareil de surveillance des environs d'un corps mobile dans lequel l'appareil comprend:

un moyen (SR) de détection d'informations concernant l'environnement pour détecter et pour stocker des informations concernant un environnement autour d'un corps mobile;

un moyen (MB) de détection d'informations concernant un corps mobile pour détecter et pour stocker la position et la posture du corps mobile;

un moyen (CB) de combinaison d'informations pour combiner les informations détectées par le moyen (MB) de détection d'informations concernant un corps mobile et les informations détectées par le moyen (SR) de détection d'informations concernant l'environnement, corriger une relation relative de position et de posture entre le corps mobile et l'environnement autour du corps mobile, et délivrer en sortie des informations d'une telle relation relative;

un moyen (SV) créant une vue spécifique pour créer une vue spécifique du corps mobile par référence aux informations concernant l'environnement autour du corps mobile à une position spécifique sur la base des informations délivrées en sortie par le moyen (CB) de combinaison d'informations;

un moyen d'affichage (VD) pour afficher la vue spécifique créée par le moyen (SV) créant une vue spécifique comme une image; **caractérisé par**

un moyen (MO) de détection d'un obstacle en mouvement pour détecter un obstacle en mouvement autour du corps mobile sur la base des informations détectées par le moyen (SR) de détection d'informations concernant l'environnement; et

un moyen de commande d'affichage (VC) pour commander l'affichage de la vue spécifique au niveau du moyen d'affichage (VD) sur la base du résultat détecté par le moyen (MO) de détection d'un obstacle en mouvement.

2. Appareil de surveillance des environs d'un corps mobile selon la revendication 1, dans lequel le moyen de commande d'affichage (VC) commande l'affichage de la vue spécifique sur le moyen d'affichage (VD) lorsqu'une condition prédéterminée est remplie après détection de l'obstacle en mouvement par le moyen (MO) de détection d'un obstacle en mouvement.

3. Appareil de surveillance des environs d'un corps mobile selon la revendication 1, dans lequel le moyen (SR) de détection d'informations concernant l'environnement comprend:

au moins un moyen de capture d'images (CD) monté sur le corps mobile pour obtenir une image de l'environnement autour du corps mobile et pour délivrer en sortie une telle image, et le moyen de capture d'images obtenant au moins deux images prises à un premier état et à un deuxième état du corps mobile lorsque le corps mobile se déplace du premier état au deuxième état;

un moyen (PF) de suivi de point caractéristique pour détecter une coordonnée d'un point caractéristique dans la première image dans le premier état du corps mobile et une coordonnée dans la deuxième image dans le deuxième état correspondant au point caractéristique dans la première image dans le premier état;

un moyen (DS) de détection d'une condition de mouvement pour détecter la position et la posture du corps mobile au moins dans le premier et le deuxième état; et

un moyen (RC) de construction d'informations tridimensionnelles concernant l'environnement pour construire des informations tridimensionnelles concernant l'environnement du point caractéristique sur la base de la position et de la posture du corps mobile dans le premier et le deuxième état détectées par le moyen (DS) de détection d'une condition de mouvement, la coordonnée du point caractéristique dans l'image au premier état du corps mobile et la coordonnée dans la deuxième image dans le deuxième état correspondant au point caractéristique dans la première image dans le premier état.

4. Appareil de surveillance des environs d'un corps mobile selon la revendication 3, dans lequel le moyen (MO) de détection d'un obstacle en mouvement détecte l'obstacle en mouvement dans une image prise par le moyen de capture d'images (CD), et le moyen de commande d'affichage (VC) commande l'affichage de l'image de la vue spécifique au niveau du moyen d'affichage (VD) lorsqu'une condition prédéterminée est remplie détection de l'obstacle en mouvement par le moyen (MO) de détection d'un obstacle en mouvement.

5. Appareil de surveillance des environs d'un corps mobile selon la revendication 4, dans lequel le moyen de commande d'affichage (VC) commande l'affichage de l'image de la vue spécifique au niveau du moyen d'affichage (VD) lorsqu'au moins l'une des conditions suivantes est vraie:

(1) un temps a supérieur ou égal à un temps prédéterminé s'écoule après disparition de l'obstacle en mouvement de l'image prise par le moyen de capture d'images (CD);

(2) le corps mobile s'est déplacé d'une distance supérieure ou égale à une distance prédéterminée, et

(3) l'obstacle en mouvement tourne d'un angle supérieur ou égal à un angle prédéterminé.

6. Appareil de surveillance des environs d'un corps mobile selon les revendications 3 à 5, dans lequel le moyen (MO) de détection d'un obstacle en mouvement détecte l'obstacle en mouvement en calculant un différentiel au moyen d'au moins l'une d'une opération arithmétique ou d'une opération logique entre deux images, la première image prise au premier état et la deuxième image prise au deuxième état, prises par le moyen de capture d'images (CD) lorsque le corps mobile est dans une condition statique.

7. Appareil de surveillance des environs d'un corps mobile selon la revendication 3 à la revendication 5, dans lequel le moyen (MO) de détection d'un obstacle en mouvement détecte l'obstacle en mouvement en calculant un différentiel au moyen d'au moins l'une d'une opération arithmétique ou d'une opération logique entre deux images, entre une deuxième image estimée dans le deuxième état sur la base de la première image dans le premier état et les informations détectées au niveau du moyen (MB) de détection d'informations concernant un corps mobile, et la deuxième image dans le deuxième état au moyen d'au moins l'une d'une opération d'arithmétique ou d'une opération logique, prises par le moyen de capture d'images (CD) lorsque le corps mobile est en mouvement.

**8.** Appareil de surveillance des environs d'un corps mobile selon l'une quelconque des revendications 3 à 7, dans lequel le moyen (DS) de détection d'une condition de mouvement du moyen (SR) de détection d'informations concernant l'environnement détecte la position et la posture du corps mobile au premier et au deuxième états sur la base des informations détectées par le moyen (MB) de détection d'informations concernant un corps mobile.

**9.** Appareil de surveillance des environs d'un corps mobile selon l'une quelconque des revendications 1 à 8, comprenant en plus:

un moyen d'introduction d'instructions (SE) pour introduire une instruction se rapportant à la vue spécifique par un opérateur du corps mobile, et
un moyen de commutation (CH) compris dans le moyen (SV) créant une vue spécifique pour faire basculer la vue spécifique à une vue basée sur l'instruction provenant de l'opérateur en réponse à un résultat d'introduction par le moyen d'introduction d'instructions (SE).

**10.** Appareil de surveillance des environs d'un corps mobile selon l'une quelconque des revendications 1 à 8, comprenant en plus:

un moyen d'estimation de voie (TR) pour estimer une voie de mouvement du corps mobile sur la base des informations détectées par le moyen (MB) de détection d'informations concernant un corps mobile, et
un moyen de superposition (OL) compris dans le moyen (SV) créant une vue spécifique pour superposer la voie de mouvement estimée par le moyen d'estimation de voie (TR) sur la vue spécifique, dans lequel le moyen d'affichage (VD) affiche une image superposant la voie de mouvement estimée sur la vue spécifique.

FIG. 1

MO — Moving obstacle detecting means

SR — Environment information detecting means

CD — Image capturing means

PF — Feature point tracking means

DS — Moving condition detecting means

RC — Three-dimensional environment information constructing means

CB — Information combining means

SV — Specific view creating means

VC — Display controlling means

VD — Displaying means

MB — Movable body information detecting means

Position·Posture

EP 1 486 377 B1

FIG. 2

Moving obstacle detecting means — MO

SR

Environment information detecting means

CD

Image capturing means

RC

Three-dimensional environment information constructing means

PF

Feature point tracking means

DS

Moving condition detecting means

Information combining means

Specific view creating means

Display controlling means

Displaying means

CB

MB

Movable body information detecting means

Position·Posture

SE

Instruction inputting means

Switching means

SV    CH

VC

VD

EP 1 486 377 B1

# F I G. 4

# FIG. 5

10 Electronic control device

8 Monitor

Camera — 2

Superimposing portion — 14

Graphics drawing portion — 13

Image recognizing portion — 12

Steering angle sensor — 4

Shift lever switch — 6

Vehicle wheel speed sensor — 7

CPU — 11

Audio outputting portion — 15

9 Speaker

# FIG. 6

# FIG. 7

# FIG. 8

# FIG.9(A)

# FIG.9(B)

# FIG.9(C)

# FIG.10(A)

# FIG.10(B)

# FIG.10(C)

EP 1 486 377 B1

# F I G. 11

EP 1 486 377 B1

# F I G. 12

$\theta 2$

$(x2, y2)$

Yo

$\theta 1$

1

$(x1, y1)$

(Zo)

Xo

EP 1 486 377 B1

FIG. 14

EP 1 486 377 B1

FIG. 16

# FIG. 17

EP 1 486 377 B1

EP 1 486 377 B1

FIG. 19

FIG. 20

FIG. 21

# FIG. 22 (A)

# FIG. 22 (B)

Image of a rear view

Left corner          Right corner

OB

Sn

EP 1 486 377 B1

# F I G. 23

# F I G. 24

# F I G. 25

## F I G. 26

## F I G. 27

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1005234 A2
- JP 62278477 A
- JP 1141137 A
- JP 2001187553 A
- JP 2002052999 A

**Non-patent literature cited in the description**

- *Information Processing,* July 1996, vol. 37 (7
- *Information Processing,* August 1996, vol. 37 (8